# EUROPÄISCHE PATENTSCHRIFT

(11) **EP 2 100 739 B1**
(45) Veröffentlichungstag und Bekanntmachung des Hinweises auf die Patenterteilung: **09.04.2014**
(21) Anmeldenummer: 09008504.4
(22) Anmeldetag: 01.02.2006
(51) Int. Cl.: B41J 2/165, B41J 2/155, B41J 11/00, G06K 15/00, H04N 1/00

(54) **Verfahren zum Drucken mehrfarbiger Bilder**
Method for printing multi-colour images
Procédé d'impression d'images multicolores

(30) Priorität: 08.02.2005 AT 2032005; 10.08.2005 AT 13422005
(43) Veröffentlichungstag der Anmeldung: 16.09.2009
(62) Teilanmeldung aus: 06722998.9
(73) Patentinhaber: DURST PHOTOTECHNIK A.G., 39042 Brixen (IT)
(72) Erfinder: Obertegger, Franz, 39042 Brixen (IT); Gandini, Mario, 39042 Brixen (IT); Stoll, Thomas, 39030 Gsies (IT); Niederbacher, Andrä, 39031 Bruneck (IT)
(74) Vertreter: Ofner, Clemens

(56) Entgegenhaltungen:
- EP-A- 1 388 422
- EP-A1- 1 038 689
- US-A- 3 177 568
- US-A- 4 488 830
- US-A- 4 847 638
- US-A1- 2003 099 494
- US-A1- 2004 085 428
- US-A1- 2004 109 047
- US-A1- 2004 119 781
- US-A1- 2004 239 710
- US-B1- 6 305 856

## Beschreibung

Die Erfindung betrifft eine Tintenstrahldruckvorrichtung und ein Verfahren zum Drucken von mehrfarbigen Bildern, entsprechend den Merkmalen des Oberbegriffs der Ansprüche 1 und 14.

Es sind bereits Tintenstrahldruckvornchtungen zum Drucken mehrfarbiger Bilder bekannt, bei denen aus mehreren Druckköpfen zusammengesetzte Druckkopfanordnungen verwendet werden, die zu einer gesamten Druckbereichsbreite zusammengesetzt sind und während des Druckvorganges relativ zu einer Transporteinrichtung, auf der zu bedruckende Druckteile transportiert werden, stationär angeordnet sind. Eine derartige Druckvorrichtung ist beispielsweise in dem Dokument EP 1 038 689 B1 beschrieben.

Bei dem Tintenstrahl-Drucker gemäß dem Dokument US 2004/0085428 A1 ist vorgesehen, dass dieser einen Druckkopf, der eine einzige Reihe von Düsenöffnungen, die die gesamte Druckbereichsbreite überspannen, aufweist. Weiteres ist von diesem Tintenstrahl-Drucker bekannt, dass eine Bilddatenschaltung zur Ansteuerung der Druckköpfe mit einer Pufferschaltung ausgebildet ist, wobei in der Pufferschaltung mehre Teilpuffer, jeweils einer für die einzelnen Farben, vorgesehen sind.

Dieses Dokument wird als nächstliegende Stand der Technik betrachtet, und offenbart ein Verfahren, von dem sich der Gegenstand des Anspruchs 1 nur dadurch unterscheidet, dass die Bilddaten des ersten Bildes zur Größe eines ersten Druckteiles und die Bilddaten des zweiten Bildes zur Größe eines zweiten Druckteiles passend berechnet werden, und dass wenn der weitere Druckteil unter die erste Druckkopfreihe tritt und noch bevor der erste Druckteil die erste Druckkopfreihe verlassen hat, Bilddaten von zwei Bildern gleichzeitig von zwei verschiedenen Speicherbänken der Pufferschaltung ausgelesen und durch die Druckköpfe der ersten Druckkopfreihe gedruckt werden.

Besonders bei der Anwendung derartiger Tintenstrahldruckvorrichtungen in Verbindung mit industriellen Herstellungsprozessen bzw. industriellen Produktionsantagen, wo derartige Tintenstrahldnickvorrichtungen Bestandteil eines kontinuierlichen Produktionsprozesses sind, ist eine hohe Zuverlässigkeit und Ausfallsicherheit dieser Tintenstrahldruckvorrichtungen erforderlich.

Es ist die Aufgabe der vorliegenden Erfindung, eine Tintenstrahldruckvorrichtung zu schaffen, die einen Einsatz in industriellen Produktionsanlagen mit hoher Flexibilität bzw. hoher Druckgeschwindigkeit erlaubt.

Die Aufgabe der Erfindung wird durch das Verfahren entsprechend den Merkmalen des Anspruchs 1 gelöst. Von Vorteil ist dabei, dass in der Bilddatenschaltung der Druckkopfanordnung stets ausreichend Bilddaten vorrätig gehalten sind, sodass auch kurzfristige Verzögerungen bei der Bilddatenübertragung zu keinen Unterbrechungen des Druckvorganges führen. Von Vorteil ist dabei eine einfachere Steuerung des Datenverarbeitungssystems für die Steuervorrichtung zur Durchführung des Verfahrens.

Weitere vorteilhafte Ausbildungen des Verfahrens sind in den Ansprüchen 2 bis 14 beschrieben.

Zum besseren Verständnis der Erfindung wird diese anhand der nachfolgenden Figuren näher erläutert.

Es zeigen in schematisch vereinfachter Darstellung:
- Fig. 1: eine Übersichtsdarstellung der Tintenstrahldruckvorrichtung;
- Fig. 2: die Unterseite der Druckkopfanordnung gemäß Fig. 1 mit den darin angeordneten Druckköpfen;
- Fig. 3: eine Draufsicht auf die Düsenspüleinrichtung gemäß Fig. 1;
- Fig. 4: einen Ausschnitt der Tintenstrahldruckvorrichtung gemäß Fig. 1 mit der Einrichtung der Lagekorrektur der Druckteile in Draufsicht;
- Fig. 5: ein Blockschaltbild des Datenflusses zwischen dem Bildrechner und der Druckkopfanordnung;
- Fig. 6: eine Pufferschaltung der Druckkopfanordnung gemäß Fig. 5 zur Zwischenspeicherung von Bildinformationsdaten einer zu druckenden Farbe;
- Fig. 7: ein Schema zur Auswahl des Bildausschnitts einer Bildvorlage zum Bedrucken von Fliesen;
- Fig. 8: ein Schema zur Auswahl einer geordneten Folge unterschiedlicher Bildausschnitte aus einer Bildvorlage zum Bedrucken von Fliesen;
- Fig. 9: ein Schema einer weiteren geordneten Auswahl von Bildausschnitten aus einer Bildvorlage;
- Fig. 10: ein Schema einer zufälligen Auswahl von Bildausschnitten aus einer Bildvorlage,
- Fig. 11: ein Schema einer weiteren zufälligen Auswahl von Bildausschnitten aus einer Bildvorlage mit einer Drehung der Bildausschnitte um 90 °;
- Fig. 12: ein Schema einer weiteren zufälligen Auswahl von Bildausschnitten aus einer Bildvorlage mit einer beliebigen Drehung der Bildausschnitte;
- Fig. 13: ein Schema einer Betriebsweise der Tintenstrahldruckvorrichtung unter Verwendung von mehreren unterschiedlichen Bildvorlagen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

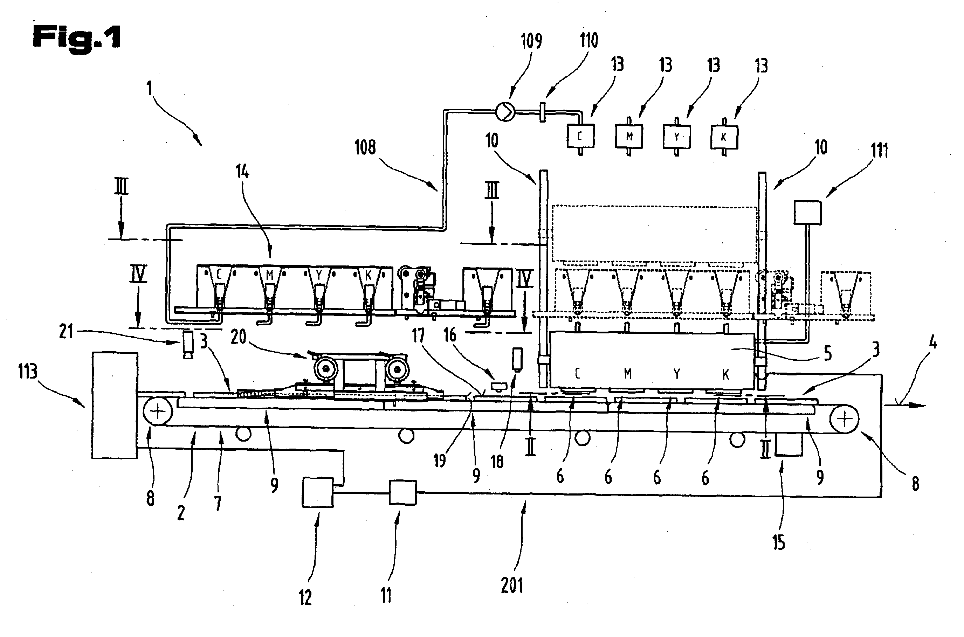

Fig. 1 zeigt eine Übersichtdarstellung der Tintenstrahldruckvorrichtung 1 mit schematisch und vereinfacht dargestellten Einzelbestandteilen.

Die Tintenstrahldruckvorrichtung 1 weist eine im Wesentlichen horizontal angeordnete Transporteinrichtung 2 zum Bewegen von darauf liegenden zu bedruckenden Druckteilen 3 in einer Vorschubrichtung 4 (in Fig. 1 von links nach rechts) auf. Über der Transporteinrichtung 2 befindet sich eine Druckkopfanordnung 5 mit Druckköpfen 6, durch die die darunter vorbeibewegten Druckteile 3 mit Tinte bedruckt werden.

Die Transporteinrichtung 2 wird vorzugsweise durch ein endloses Förderband 7 gebildet, das über zumindest zwei Umlenkrollen 8 geführt bzw. angetrieben wird. Der in Vorschubrichtung 4 bewegte obere Abschnitt des Förderbandes 7 wird durch über eine oder mehrere Führungsplatten 9 an seiner Unterseite gestützt. In dem das Förderband 7 über die horizontal und fluchtend ausgerichteten Führungsplatten 9 gleitend gezogen wird, wird eine entsprechend gleichmäßige horizontale Bewegung der Druckteile 3 in Vorschubrichtung 4 erreicht.

Die Druckkopfanordnung 5 weist zu jeder Farbe eine Mehrzahl von Druckköpfen 6 auf, sodass die gesamte Breite des Druckmediums bzw. der Druckteile auf einmal bedruckt werden kann, ohne dass sich die Druckkopfanordnung 5 in bezüglich der Vorschubrichtung 4 seitlicher Richtung bewegen muss. D.h. die Druckkopfanordnung 5 ist in seitlicher Richtung feststehend angeordnet. Durch vertikal ausgerichtete Führungen 10 kann die Druckkopfanordnung 5 in Richtung auf das Förderband 7 abgesenkt bzw. durch Anheben von diesen entfernt werden.

Zur Ansteuerung der Druckköpfe 6 der Druckkopfanordnung 5 werden die Bilddaten eines zu druckenden Bildes durch einen Bildrechner 11 in Steuersignale für die Druckköpfe 6 umgewandelt. Zur Steuerung der gesamten Tintenstrahldruckvorrichtung ist darüber hinaus eine Steuereinrichtung 12 vorgesehen. Die Steuerungseinrichtung 12 weist eine Software zur Steuerung der Tintenstrahldruckvorrichtung auf, sowie auch der Bildrechner 11 eine Software zur Bilddatenverarbeitung aufweist.

Gemäß diesem Ausführungsbeispiel ist das Drucken von farbigen Bildern mit den Farben Cyan, Magenta, Yellow und Karo bzw. Black vorgesehen und werden die Druckköpfe 6 bzw. die Druckkopfanordnung 5 aus entsprechenden Tanks 13 mit Tinte versorgt.

Die Tintenstrahldruckvorrichtung 1 kann selbstverständlich auch für eine andere Anzahl als vier unterschiedliche Farben ausgerüstet sein.

Die Tintenstrahldruckvorrichtung 1 weist weiters eine Düsenspüleinrichtung 14, die nach Anheben der Druckkopfanordnung 5 aus einer Parkposition unter die Druckkopfanordnung 5 verschoben werden kann (gestrichelt eingezeichnet). Zum Lösen evt. vorliegender Verstopfungen von Düsen der Druckköpfe 6 wird durch alle Düsen Tinte gepresst, die durch die Düsenspüleinrichtung 14 aufgefangen wird.

Vorzugsweise im Bereich des unteren Abschnittes des Förderbandes 7 der entgegen der Vorschubrichtung 4 bewegt wird, ist eine Reinigungseinrichtung 15 zur Reinigung des Förderbandes 7 angeordnet. Damit können Tintenreste, die auf das Förderband 7 gelangt sind, entfernt werden. Die Reinigung mit der Reinigungseinrichtung 15 kann beispielsweise durch Abstreifen bzw. Absaugen noch nicht eingetrockneter Tintenreste erfolgen. Die Reinigungswirkung kann zusätzlich unterstützt werden, indem das Förderband mit einem Reinigungsmittel besprüht wird und dadurch eingetrocknete Tintenreste gelöst werden.

Durch einen Sensor 16 wird die vertikale Lage einer Oberseite 17 des Druckteiles 3 bzw. die Dicke des Druckteiles detektiert, sodass durch die Steuervorrichtung 12 die vertikale Position der Druckkopfanordnung 5 bzw. der Abstand der Druckkopfanordnung 5 von der Oberseite 17 des Druckteiles 3 automatisch eingestellt werden kann. Ein weiterer Sensor 18 der ebenfalls am eingangsseitigen Bereich der Transporteinrichtung 2 der Druckkopfanordnung 5 vorgeordnet ist, ist vorgesehen, um eine Vorderkante 19 eines Druckteiles 3 zu detektieren, sodass der Druckvorgang der Druckkopfanordnung 5 zeitgerecht gestartet werden kann.

Im Eingangsbereich der Transporteinrichtung 2 befindet sich außerdem eine Einrichtung 20 zur Lagekorrektur der Druckteile 3, durch die die Ausrichtung der Druckteile 3 auf dem Förderband 7 in eine definierte Lage gebracht wird. Alternativ dazu kann auch eine Kamera 21 vorgesehen sein, durch die in Verbindung mit einer automatischen Bilderkennung die Lage als auch die Ausrichtung des auf das Förderband 7 liegenden Druckteiles 3 detektiert wird und diese Information bei der Berechnung der Bilddaten durch den Bildrechner 11 berücksichtigt wird.

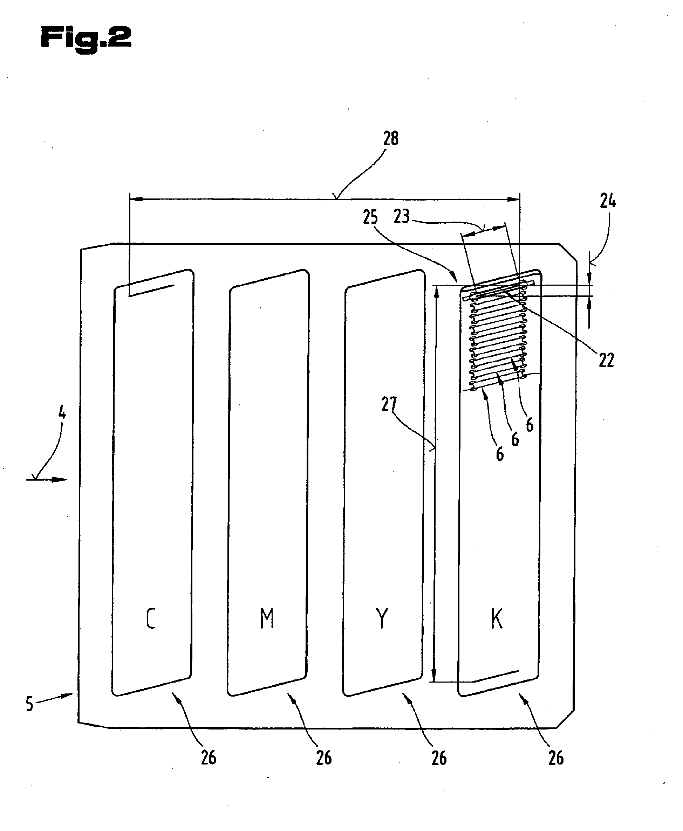

Die Fig. 2 zeigt die Unterseite der Druckkopfanordnung 5 gemäß Fig. 1, mit den darin angeordneten Druckköpfen 6.

Jeder der Druckköpfe 6 weist eine durch einen Vielzahl nebeneinander liegender und linear ausgerichteter Düsen gebildete Düsenreihe 22 mit einer Düsenreihenlänge 23 auf. Die Druckköpfe 6 bzw. deren Düsenreihen 22 sind bezüglich der Vorschubrichtung 4 schräg bzw. geneigt angeordnet, sodass jede der Düsenreihen 22 eine senkrecht bezüglich der Vorschubrichtung 4 gemessene Druckbereichbreite 24 der Düsenreihe 22 aufweist, die deutlich kleiner ist, als die Düsenreihenlängen 23. Damit kann durch Verwendung von Druckköpfen 6 mit einer niedrigen Auflösung bzw. einer geringen Dichte von Düsen in der Düsenreihe 22 eine wesentlich höhere Auflösung bezüglich der zur Vorschubrichtung 4 senkechten Richtung erreicht werden.

Ohne Einschränkung der Allgemeinheit sind in der beschriebenen Ausführungsform jeweils neun Druckköpfe 6 zu einem Druckkopfmodul 25 zusammengesetzt (aus Gründen der Übersichtlichkeit, ist in Fig. 2 nur ein solches Druckkopfmodul 25 dargestellt). Mehrere solcher Druckkopfmodule 25 (in der beschriebenen Ausführungsform vier Druckkopfmodule 25) bilden gemeinsam eine Druckkopfreihe 26 zum Drucken jeweils einer der zu druckenden Farben. Die Druckköpfe 6 sind dabei so angeordnet, dass die Druckbereichsbreiten 24 der Düsenreihen 22 zweier benachbarter Düsenreihen 22 lückenlos aneinander anschließen, sodass sich eine gesamte Druckbereichsbreite 27 der Druckkopfreihe 26 entsprechend der Anzahl der Druckköpfe 6 ergibt.

Für jede der zu druckenden Farben ist eine Druckkopfreihe 26 vorgesehen. Gemäß diesem Ausführungsbeispiel sind für Druckkopfreihen 26 bezüglich der Vorschubrichtung 4 hintereinander angeordnet und erstrecken sich die Düsen der Druckkopfreihen 26 somit über eine Druckbereichslänge 28.

In der beschriebenen Ausführungsform werden vorzugsweise Piezzo-Inkjet-Druckköpfe für die Druckköpfe 6 verwendet und können damit Druckbereichsbreiten 27 von mehr als 50 cm erreicht werden, wobei Auflösungen im Bereich von 200 bis 800 dpi möglich sind.

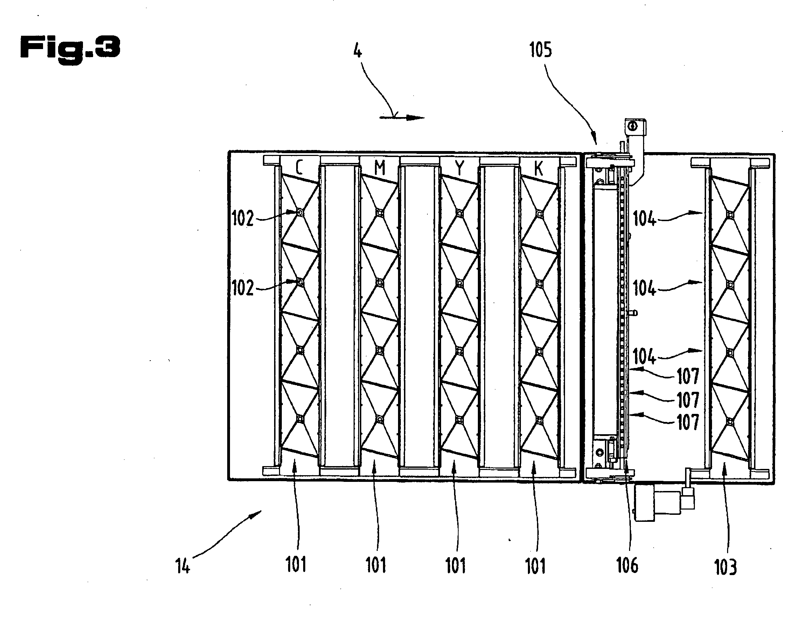

Die Fig. 3 zeigt eine Draufsicht auf die Düsenspüleinrichtung 14 gemäß Fig. 1.

Die Düsenspüleinrichtung 14 umfasst zunächst vier Trichterreihen 101 mit jeweils vier Auffangtrichtern 102. Form und Größe der Auffangfläche dieser Auffangtrichter 102 ist so gestaltet, dass alle Düsen der Druckköpfe 6 eines Druckkopfmoduls 25 (siehe Fig. 2) von einem Auffangtrichter 102 abgedeckt werden können, wenn die Düsenspüleinrichtung 14 unter der Druckkopfanordnung 5 positioniert wird. Die Abstände der Trichterreihen 101 bezüglich der Vorschubrichtung 4 sind so bemessen, dass alle Druckkopfreihen 26 gleichzeitig über den Trichterreihen 101 positioniert werden können (Fig. 1).

Die Düsenspüleinrichtung 14 weist sodann eine weitere Trichterreihe 103 auf, deren Auffangtrichter 104 bezüglich Form und Größe ebenfalls so bemessen sind, dass die Düsenreihen 22 eines Druckkopfmoduls 25 zur Gänze abgedeckt werden, wenn ein Druckkopfmodul 25 darüber positioniert wird.

Schließlich umfasst die Düsenspieleinrichtung 14 eine Düsenreinigungseinrichtung 105. Diese besteht vorzugsweise aus einem Absaugbalken 106 mit Absaugdüsen 107. Der Absaugbalken 6 bzw. die daran angeordneten Absaugdüsen 7 sind in einer geraden Reihe und senkrecht bezüglich der Vorschubrichtung 4 angeordnet. Die Anzahl der Absaugdüsen 7 entspricht der Anzahl der Drückköpfe 6 in einer Druckkopfreihe 26. Der relative Abstand zweier benachbarter Absaugdüsen ist gleich dem Abstand zweiter benachbarter Druckköpfe 6 bzw. gleich der Druckbereichsbreite 24 der Düsenreihe 22.

Zum Reinigen der Düsen der Druckköpfe 6 wird der Druckvorgang unterbrochen, indem die Transporteinrichtung 2 bzw. das Förderband 7 angehalten wird (Fig. 1). Die Druckkopfanordnung 5 wird entlang der Führungen 10 in vertikaler Richtung soweit angehoben, dass die Düsenspüleinrichtung 14 in horizontaler Richtung, d.h. im Wesentlichen parallel zur Vorschubrichtung 4 unter die Druckkopfanordnung 5 geschoben werden kann. Die Düsenspüleinrichtung 14 wird zunächst so positioniert, dass sich jeweils eine Trichterreihe 101 unter einer der Druckkopfreihen 26 befindet und die Düsenöffnungen der entsprechenden Düsenreihen 22 (Fig. 2) durch die Auffangfläche der Auffangtrichter 102 abgedeckt werden. Sodann werden die Druckköpfe 6 durch die Steuereinrichtung 12 derart angesteuert, dass durch alle Düsen Tinte ausgestoßen wird. Die Düsen der Druckköpfe 6 werden derart gespült, sodass sich möglicherweise gebildete Verstopfungen lösen können und entfernt werden. Die durch die Düsen ausgestoßene Tinte wird in den Auffangtrichtern 102 gesammelt und kann nach entsprechender Reinigung an den jeweiligen Tank 13 der entsprechenden Farbe zurückgeführt werden.

Die einzelnen Trichterreihen sind dazu jeweils durch separate Leitungen 108 über eine Pumpe 109 und eine Tintenreinigungseinrichtung 110, die beispielsweise durch einen Filter gebildet sein kann, mit dem entsprechenden Tank 13 verbunden. Indem die bei dem Spülvorgang ausgestoßene Tinte jeweils durch separate Trichterreihen 103 aufgefangen wird, ist es möglich, die Tinte einem Recycling zuzuführen und Verluste von wertvoller Tinte weitestgehend zu vermeiden.

Zur Erzielung einer noch besseren Reinigungswirkung bei dem Düsenspülen kann vorgesehen werden, dass durch die Düsen der Druckköpfe 6 eine Reinigungsflüssigkeit hindurchgeführt bzw. ausgestoßen wird. Dazu wird nach entsprechender Ansteuerung durch die Steuereinrichtung 12 eine Reinigungsflüssigkeit aus einem Tank 111 angesaugt und durch die Düsen jeweils jener Druckkopfreihe 26 geführt, unterhalb der gerade die weitere Trichterreihe 103 der Düsenspüleinrichtung 14 positioniert ist. Diese Trichterreihe 103 ist somit zum Auffangen und Ableiten der Resttinte bzw. der Reinigungsflüssigkeit in einen Abfalltank (nicht dargestellt) vorgesehen. Ein Vermischen mit der durch die Trichterreihen 101 abgeführten und wieder verwendeten Tinte wird somit vermieden.

Insbesondere bei dem Spülvorgang, bei dem Tinte der jeweiligen Farbe durch die Düsen der Druckköpfe 6 in ihre entsprechenden Trichterreihen 101 ausgestoßen wird, kann es dazu kommen, dass Tintentropfen im Bereich der Düsenöffnungen der Druckköpfe 6 haften bleiben. Um diese Tintentropfen von den Düsenköpfen 6 zu entfernen, wird die Düsenreinigungseinrichtung 105 durch entsprechendes Verschieben der Düsenspüleinrichtung 14 an die Düsenreihen 22 der Druckköpfe 6 herangeführt bzw. darunter positioniert. Der Absaugbalken 6 mit den Absaugdüsen 7 ist an der Düsenspüleinrichtung 14 verschiebbar angeordnet, sodass eine seitliche Bewegung des Absaugbalkens 6, d.h. senkrecht bezüglich der Vorschubrichtung 4 im Ausmaß der Druckbereichsbreite 24 einer Düsenreihe 22 möglich ist. Der Absaugbalken 6 verfügt dazu über einen Mitnahmezapfen bzw. eine Mitnehmerrolle 112, die mit einer Führungsbahn (nicht dargestellt) jeweils einer Druckkopfreihe 26 in Eingriff gebracht werden kann und derart erreicht wird, dass bei einer Bewegung der Düsenspüleinrichtung 14 parallel zur Vorschubrichtung 4 die einzelnen Absaugdüsen 7 alle Düsen der schräg ausgerichteten Düsenreihen 22 der Druckköpfe 6 überstreichen. Die Absaugdüsen 7 sind vorzugsweise in vertikaler Richtung derart positioniert, dass ein relativer Abstand zu den Düsenreihen 22 von nur wenigen Zehntel mm vorhanden ist. Durch Anlegen eines Unterdrucks an die Absaugdüsen 7, wird durch die Luftströmung im Bereich des Zwischenraums zwischen der Absaugdüse 7 und der Düsenreihe 22 die restliche Tinte mitgerissen und derart entfernt.

Alternativ zu der Düsenreinigungseinrichtung 105 kann auch eine Abwischeinrichtung mit einem über eine Umlenkwalze umlaufenden und mit einem Reinigungsmittel getränkten Band das an die Düsenreihen 22 herangeführt wird bzw. an die Druckköpfe 6 gedrückt wird, verwendet werden. Eine derartige Abwischeinrichtung ist beispielsweise in der österreichischen Patentanmeldung A 2099/2003 (veröffentlicht am 15.10.2005 unter AT500098) des gleichen Anmelders geoffenbart, deren Inhalt hiermit zum Bestandteil der gegenständlichen Anmeldung erklärt wird.

Die durch die Düsenspüleinrichtung 14 gebildete Reinigungseinrichtung erlaubt die Durchführung von Reinigungszyklen mit einer Dauer von lediglich 1 bis 2 min. Für den Fall, dass die Tintenstrahldruckeinrichtung als Bestandteil eines kontinuierlichen Produktionsprozesses eingesetzt wird, ist vorgesehen, dass für die Dauer des Reinigungszyklus während das Förderband 7 angehalten wird, weitere ankommende Druckteile 3 in einem Zwischenspeicher 113 umgeleitet werden, aus dem sie nach dem Ende des Reinigungszyklus wieder entnommen und der Transporteinrichtung 2 zugeführt werden. Mit der Düsenspüleinrichtung 14 ist jedenfalls möglich den Reinigungszyklus in weniger als 5 min durchzuführen. Die Einleitung dieser Maßnahme wird von der Steuereinrichtung 12 durch Ansteuerung des Zwischenspeichers 113 automatisiert vorgenommen. Es ist insbesondere auch vorgesehen, dass die Steuereinrichtung 11 auf dem Herstellungsprozess, deren Bestandteil die Tintenstrahldruckvorrichtung 1 bildet, Einfluss nimmt, als beispielsweise durch die Steuereinrichtung 12 die Geschwindigkeit vor- bzw. nachgeordneter Förderbänder für die Druckteile 3 verringert bzw. bedarfsweise erhöht werden kann. Die Steuereinrichtung 12 kann auch die Funktion einer Gesamtsteuereinrichtung einer derartigen Produktionsanlage übernehmen.

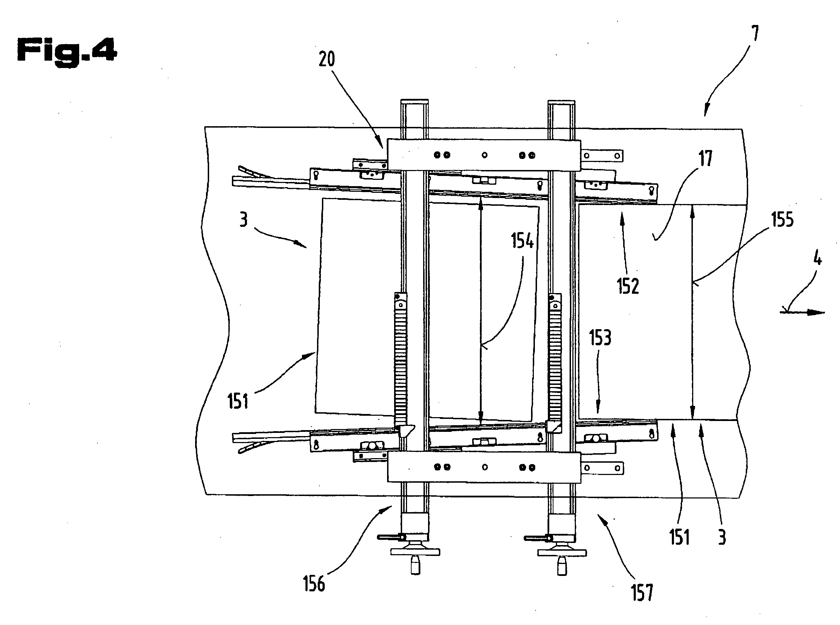

Die Fig. 4 zeigt ein Detail der Tintenstrahldruckvorrichtung 1 gemäß Fig. 1 mit der Einrichtung 20 zur Lagekorrektur der Druckteile 3 in Draufsicht.

Die Einrichtung 20 kann verwendet werden zum Ausrichten von Druckteilen 3, die zumindest zwei zueinander parallele Seitenkanten aufweisen. Dies ist beispielsweise der Fall, wenn als Druckteile 3 keramische Fliesen 151 mit der üblicherweise rechteckigen Form verwendet werden. Die Einrichtung 20 zur Lagekorrektur der Druckteile 3 weist eine linke und eine rechte Führungsleiste 152, 153 auf, die bezüglich der Vorschubrichtung 4 schräg angeordnet sind, sodass ein Abstand 154 zwischen den Führungsleisten 152, 153 sich allmählich verringert bis er an der engsten Stelle der Führungsleisten 152, 153 gleich ist einer Breite 155 der Druckteile 3 bzw. Fliesen 151. Ein Druckteil 3 bzw. eine Fliese 151, die zunächst schräg auf das Förderband 7 im Eingangsbereich der Transporteinrichtung 2 aufgelegt wird, tritt in dem es durch das Förderband 7 in Transportrichtung 4 weiterbewegt wird, in Kontakt mit einer der Führungsleisten 152, 153 und wird seine Lage allmählich derart verändert, dass die Seitenkanten der Fliese 151 schließlich parallel zur Vorschubrichtung 4 ausgerichtet sind. Die Führungsleisten 152, 153 sind in einem geringen Abstand über dem Förderband gehaltert (Fig. 1) und können über zwei Stellschlitten 156, 157, an denen sie verschiebbar befestigt sind, der Abstand 154 zwischen und die Neigung der Führungsleisten 152, 153 eingestellt werden.

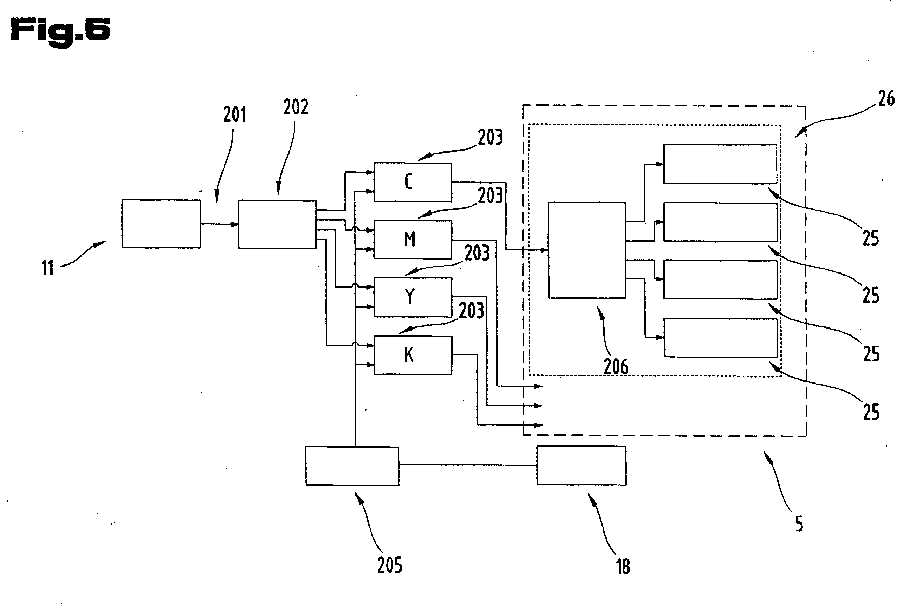

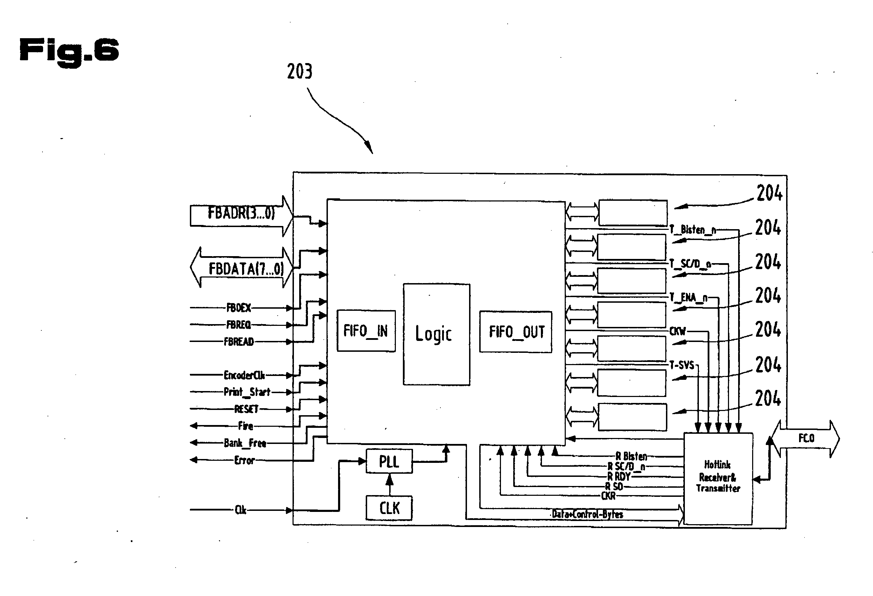

Nachfolgend wird die Funktionsweise der oben beschriebenen Tintenstrahldruckvorrichtung 1 näher erläutert. Dabei wird angenommen, dass die zu bedruckenden Druckteile 3 durch Fliesen 151 gebildet werden. Zur Beschreibung der Funktionsweise wird auch auf die Fig. 5 und 6 Bezug genommen. Eine Vorrichtung bzw. ein System, wie es hier beschrieben wird, wird aufgrund seiner Verwendungsmöglichkeit als Teil eines kontinuierlichen Fertigungsprozesses bzw. einer kontinuierlichen Fertigungsstraße in der Folge auch als "Synchronized Inline Printing System" (SIPS), bzw. "Durst SIPS-Synchronized Inline Printing System" bezeichnet.

Durch die gewählte Anordnung von vielen relativ niedrig auflösenden Druckköpfen 6 in der in Fig. 2 beschriebenen Weise zu einer Druckkopfanordnung 5 erhält man einen großflächig verteilten Gesamtdruckkopf mit relativ hoher Auflösung. Die Druckkopfanordnung 5 ist, wie in Fig. 2 beschrieben, in vier Druckkopfreihen 26 für die vier verwendeten Farben aufgeteilt. Dies hat zur Folge, dass im Falle von relativ kurzen Fliesen 151 sich gleichzeitig mehrere Fliesen 151 unter der Druckkopfanordnung 5 befinden können. Zudem ist aber selbst eine Druckkopfreihe 26 in Bezug zu den kleinsten Fliesen 151 auch so groß, dass sich zwei Fliesen 151 gleichzeitig unter einer Druckkopfreihe 26 befinden können, wobei durch diese Druckkopfreihe 26 zwei zu unterschiedlichen Fliesen 151 gehörende Teilbilder gleichzeitig bedruckt werden. Die Steuereinrichtung 12 der Tintenstrahldruckvornchtung 1 ist daher so ausgebildet, dass sie das gleichzeitige Drucken von verschiedenen Farbauszügen von mehreren Fliesen 151 sowie das gleichzeitige Drucken von zwei verschiedenen Fliesen 151 bzw. von zwei Bildern für einen Farbauszug ermöglicht.

Gemäß einem ersten Ausführungsbeispiel der Steuerung bzw. Betriebsweise der Tintenstrahldruckvorrichtung 1 ist eine Bilddatenübertragung zwischen dem Bildrechner 11 und den Druckköpfen 6 mit verschränkten Farbkanälen vorgesehen. Dabei wird ein gesamtes Bild bzw. werden die kompletten Bilddaten im Bildrechner 11 so aufbereitet, dass die gesamte Bildinformation über eine hochbitratige Übertragungsstrecke in Form von Paketen geschickt wird. Dabei sind die einzelnen Farbkanäle byteweise nacheinander in wiederkehrender Reihenfolge angeordnet. Zwischen dem Bildrechner 11 und der Druckkopfanordnung 5 besteht somit eine Übertragungsstrecke 201 (siehe Fig. 1 und Fig. 5). Da dazu weniger Hardwarekomponenten erforderlich sind, hat diese Variante den Vorteil einer geringeren Fehleranfälligkeit. Von Vorteil ist auch, dass dadurch einfachere Übertragungsprotokolle für die Datenübertragung zwischen dem Bildrechner 11 und der Druckkopfanordnung 5 möglich sind, als auch dass die Steuerung durch die Steuereinrichtung 12 einfacher erfolgen kann.

Die Fig. 5 zeigt ein Blockschaltbild des Datenflusses zwischen dem Bildrechner 11 und der Druckkopfanordnung 5. Aus Gründen der besseren Übersichtlichkeit, ist dabei nur eine der vier Druckkopfreihen 26 dargestellt, bzw. einer Bilddatenschaltung der Druckkopfanordnung.

Die Bilder bzw. Bilddaten für die einzelnen Fliesen 151 werden von der Steuereinrichtung 12, die den Druckablauf steuert, angefordert und vom Bildrechner 11 über die Übertragungstrecke 201 übertragen. Die Übertragungsstrecke 201 ist vorzugsweise durch eine faser-optische Datenübertragungsleitung realisiert. Ein Bild besteht dabei aus vier Farbauszügen, die byteweise ineinander verschränkt sind. Die entsprechenden Bildinformations-Datenpakte werden in einer Datenübertragungsschaltung 202 in vier Farbauszüge aufgespalten und in Pufferschaltungen 203 zwischengespeichert. Dabei werden die einzelnen Farbauszüge nach Bildern getrennt in getrennte Speicherbänke 204 (Fig. 6) der Pufferschaltung 203 geschrieben. Die Fig. 6 zeigt exemplarisch ein Blockschaltbild einer der Pufferschaltungen 203 gemäß Fig. 5. Fig. 6 zeigt in den Pufferschaltungen 203 können jeweils bis zu sieben Bilder (für sieben Fliesen) zwischengespeichert und nacheinander ausgegeben werden. Die Speicherbänke 204 arbeiten somit als dynamischer Ringpuffer, der eingeschriebene Bilder bei einem entsprechenden Eingangssignal bzw. Startsignal ausgibt.

Darüber hinaus erfüllt die Pufferschaltung 203 noch folgende weitere Aufgaben. Durch die Pufferschaltung 203 wird der Datentluss zwischen ankommenden Druckdaten und zum Druckkopf ausgegebenen Daten gesteuert. Weiters bewirkt sie die Freigabe des Datenflusses vom Bildrechner 11. Die Pufferschaltung 203 sorgt aber auch dafür, dass in den Speicherbänken 204 (Fig. 6) für Fälle, in denen durch die Düsen der Druckköpfe 6 keine Tinte ausgestoßen werden soll, so genannte Nullinformation in den abgespeicherten Daten eingefügt werden. "Nullen" bzw. "Nullinformation" ist einerseits erforderlich für Zwischenräume zwischen zwei aufeinander folgenden Fließen 151 und andererseits für jene Zeiträume, zu denen sich eine Fliese 151 nicht vollständig unter den Druckköpfen 6 einer Druckkopfreihe 26 befindet und daher aufgrund der Schrägstellung der Druckköpfe 6 nur diejenigen Düsen Tinte ausstoßen, die sich über einer Oberseite 17 einer Fliese 151 befinden.

Die Pufferschaltung 203 sorgt auch für die Verwaltung der Druckszenarien, wobei sich entweder immer nur eine Fliese 151 unter einer Druckkopfreihe 26 befindet oder andererseits für gewisse Zeiträume sich zwei Fließen 151 gleichzeitig unter einer Druckkopfreihe 26 befinden können.

Für die Art und Weise wie in der Pufferschaltung 203 Bilder für das Bedrucken von Fließen 151 zwischengespeichert werden, können zwei Szenarien unterschieden werden. Im ersten Fall enthält der Druckauftrag zum Bedrucken von mehreren Fliesen 151 nur Fliesen 151, die die gleiche Größe bzw. die gleiche Länge aufweisen. Beim zweiten Szenario ist vorgesehen, dass Fliesen 151 unterschiedlicher Länge bedruckt werden.

Es wird nun das Szenario für einen Druckauftrag mit Fliesen 151 von immer gleicher Fliesenlänge beschrieben. In diesem Fall teilt der Bildrechner 11 der Steuereinrichtung 12 die den Druckprozess steuert, die Fliesenlänge bzw. die entsprechende Anzahl der Datenpakete pro Fliese 151 mit. Beim Start des Druckauftrags werden zunächst sieben Bilder in die Speicherbänke 204 der Pufferschaltungen 203 geladen. Diese Bilder werden von der Steuereinrichtung über die Übertragungstrecke 201 bzw. die Datenübertragungsschaltung 202 vom Bildrechner 11 angefordert und den Putferschaltungen 203 der einzelnen Farbauszüge weiter gegeben.

Solange keine Fliese am Förderband 7 vom Eingangsbereich der Transporteinrichtung 2 her an die Druckkopfanordnung 5 heranbewegt wird, befindet sich das System vorerst in einer Wartephase. Sobald eine erste Fliese 151 den Startsensor bzw. den Sensor 18 passiert, startet ein Zählwerk 205 einen Zähler, der schließlich den Druckvorgang durch die einzelnen Druckkopfreihen 26 bzw. Farbkanäle auslöst. Erreicht der erste Zähler des Zahlwerks 205 bei der ersten detektierten Fliese 151 einen Zählerstand der dem Streckenäquivalent vom Montageort des Sensors 18 bis zur ersten Druckkopfreihe 26 (in Fig. 1 die Druckkopfreihe 26 für C = Zyan), so wird die Ausgabe dieses Farbauszuges bzw. der entsprechenden Daten aus der Pufferschaltung 203 für die Farbe Zyan gestartet. Dieser Vorgang erfolgt analog für die weiteren drei Farben. Durch ein Druckkopf-Interface 206 werden die Bilddaten auf die Druckköpfe 6 der Druckkopfmodule 25 der entsprechenden Druckkopfreihe 26 verteilt.

Je kürzer die ankommenden Fliesen 151 sind, desto häufiger wird durch den Sensor 18 ein Zähler des Zählwerkes 205 gestartet, bevor überhaupt die vollständige Ausgabe eines Bildes abgeschlossen ist. Da bei den kürzesten Fliesen 151 gleichzeitig insgesamt sechs Fliesen unter der Druckkopfanordnung sein können, umfasst das Zählwerk 205 sieben Zähler, die jeweils für eine der vom Sensor 18 detektierten Fliesen 151 nacheinander gestartet werden. Erreichen die individuellen Zähler des Zählwerkes 205 die Zählerstände, bei denen die einzelnen Farben ausgegeben werden, so wird von diesem die Ausgabe der Daten aus den Speicherbänken 204 der Pufferschaltungen 203 ausgelöst.

Erreichen die Zähler des Zählwerkes 205 einen maximalen Zählerstand, so werden sie wieder rückgesetzt und verbleiben in diesem Zustand, bis ein erneuter Start durch den Sensor 18 ausgelöst wird. Diese Art der Steuerung der Tintenstrahldruckvorrichtung 1 ermöglicht es, dass die Fließen 151 mit unterschiedlichen, relativen Abständen zueinander an der Druckkopfanordnung 5 ankommen können.

Aufgrund der Schrägstellung der Druckköpfe 6 in Bezug auf die Vorschubrichtung 4 (Fig. 2) ist eine entsprechend komplexe Organisation der Ausgabe der Daten aus den Speicherbänken 204 der Pufferschaltungen 203 erforderlich. Neben der Anordnung der Druckköpfe 6 innerhalb einer Druckkopfreihe 26 müssen die Bilddaten durch den Bildrechner 11 umsortiert werden. Dabei ist außerdem vorgesehen, dass von dem Bildrechner 11 nur Nutzdaten geschickt werden, d.h. nur für jene Düsen der Druckköpfe 6 bzw. für jene Bildpunkte, an denen tatsächlich ein Tintenausstoß erfolgen kann. Diese hat den Vorteil, dass die Kapazität der Übertragungsstrecke 201 maximal ausgenutzt werden kann.

Zunächst wird die Ansteuerung der Druckkopfanordnung 5 für den Fall, dass sich maximal eine Fliese 151 unter einer Druckkopfreihe 26 befindet, beschrieben. In diesem Fall ist der Abstand der ankommenden Fliesen 151 zueinander so groß, dass sich in keinem Fall zwei Fliesen 151 gleichzeitig unter einer Druckkopfreihe 26 befinden.

Für jeden Ausstoßvorgang von Tinten durch einen Druckkopf 6 muss zunächst für alle Düsen seiner Düsenreihe 22 die Information zur Verfügung gestellt werden, ob ein Tintenausstoß durch diese Düse erfolgen soll ("Eins") oder ob kein Tintenausstoß erfolgen soll ("Null"). Wegen der schrägen Ausrichtung der Druckköpfe 6 innerhalb einer Druckkopfreihe 26 ist es erforderlich, dass beim Eintritt einer Fließe 151 unter eine Druckkopfreihe 26 die einzelnen Druckköpfe 6 zunächst nur sukzessive für jeden Auslösevorgang von Tintenausstoß mit Nutzinformation geladen wird. Für jene Düsen einer Düsenreihe 22, die sich nicht über der Oberseite 17 der Fliese 151 befinden, ist dabei als Information "Null" vorzusehen. Mit zunehmendem Eintritt der Fliese 151 unter die Druckkopfreihe 26 nimmt somit die Anzahl der "Nullen" ab und im Gegenzug die Anzahl der zu druckenden Bildinformation zu. Die Pufferschaltungen 203 erkennen autark, dass sie auf jeden Ladezyklus eines Druckkopfs 6 zuerst "Nullen" und dann Nutzinformation aus der momentan zu druckenden Speicherbank 204 ausgeben muss, bis die Fliese 151 vollständig unter eine Druckkopfreihe 26 eingetreten ist. Dabei nimmt die Anzahl der "Nullen" ab und die Anzahl der Nutzbits zu, bis nur mehr Nutzbits in die Druckköpfe geladen werden. Wenn die Fliese 151 eine Druckkopfreihe 26 verlässt, wird der selbe Vorgang in umgekehrter Reihenfolge durchgeführt.

Bei der folgenden Beschreibung der Ansteuerung der Druckkopfanordnung 5 wird angenommen, dass sich phasenweise auch zwei Fliesen 151 gleichzeitig unter einer Druckkopfreihe 26 befinden können. In diesem Fall ist der Abstand der ankommenden Fliesen zueinander so gering, dass es auch vorkommt, dass zwei Fliesen 151 gleichzeitig unter einer Druckkopfreihe 26 vorbewegt werden. Dabei enthält die, einem Druckkopf 6 zur Verfügung gestellte Information gleichzeitig die Information eines ersten Bildes zum Bedrucken der ersten Fliese 151 und die Information eines zweiten Bildes der zweiten Fliese 151. Wenn nun die erste Fliese 151 die Druckkopfreihe 26 zu verlassen beginnt, dann fügt die Pufferschaltung 203 nach der Nutzinformation die schon erwähnten Nullbits ein, deren Anzahl von Auslösevorgang zu Auslösevorgang zunimmt. Tritt nun die nächste Fliese 151 unter die Druckkopfreihe 26 noch bevor die erste Fliese 151 die Druckkopfreihe 26 verlassen hat, so lädt die Pufferschaltung 203 die Druckköpfe 6 für einen Auslösevorgang zum Ausstoßen von Tinte sukzessive mit:
Daten aus der Speicherbank 204 n, für die Fliese 151, die aus der Druckkopfreihe 26 herausläuft und deren momentan bearbeiteter Farbauszug fast vollständig gedruckt ist;
Nullbits für die Berücksichtigung des Abstands zwischen den Fliesen 151;
Datenbank aus der Speicherbank 204 n + 1 für die zweite, unter die Druckkopfreihe 26 hineinlaufende Fliese 151.

In diesem Fall werden Bildinformationen von zwei Bildern gleichzeitig von zwei verschiedenen Speicherbänken 204 (n bzw. n + 1) der Pufferschaltung 203 ausgelesen und durch die Druckköpfe 6 der betreffenden Druckkopfreihe 26 gedruckt.

Von der Pufferschaltung 203 wird dabei auch berücksichtigt, dass von der gewählten Auflösung eine unterschiedliche Anzahl von Nullbits beim Einlaufen der Fliesen 151 bzw. zwischen zwei aufeinander folgenden Fliesen 151 (bei geringem Fliesenabstand) einzufügen sind. Es kann in Auflösungsstufen von 100, 200, 300, 400, 500, 600 und 800 DPI gedruckt werden.

Die vorstehend beschriebene Funktionsweise dient für alle vier Farben, kann aber auch für eine unterschiedliche Anzahl von Farben angewandt werden. Dabei ist die Anzahl der Druckkopfreihen 26 als auch die Anzahl der Pufferschaltungen 203 entsprechend zu ändern.

Der Druckvorgang für das Drucken eines Bildes auf eine Fliese 151 läuft somit für die einzelnen Farben folgendermaßen ab. Erreicht der der Fliese 151 zugeordnete Zähler des Zählwerks 205 den Zählerstand für "Drucken Zyan", so wird der Druckvorgang für Zyan gestartet. Erreicht der Zähler des Zählwerks 205 den Zählerstand "Drucken Magenta", so wird der Druckvorgang für Magenta gestartet usw. Die Schwell-Zählerstände für die Ausgabe der jeweiligen Farben werden von dem Bildrechner 11 der Elektronik der Druckkopfanordnung 5 mitgeteilt und dort gespeichert.

Es wird nun das Szenario für einen Druckauftrag mit Fliesen 151 von jeweils unterschiedlicher Fliesenlänge beschrieben. In einem solchen Fall benötigt das System zwei Sensoren, mit denen die Fliesen 151 detektiert werden. Der erste im Eingangsbereich der Transporteinrichtung 2 angeordnete Sensor 16 detektiert die Fliesen 151 und misst deren Länge. Abhängig von der gemessenen Länge, fordert die Steuereinrichtung 12 die den Druckablauf steuert, die zur gemessenen Fliese 151 passende Anzahl an Datenpaketen vom Bildrechner 11 an. Der Bildrechner 11 berechnet ein Bild passender Größe und schickt es an die Datenübertragungsschaltung 202. Erreicht die Fliese 151 den zweiten Sensor 18, der als so genannter Startsensor fungiert, so wird ein Zähler des Zählwerks 205 gestartet. Der Beginn des Druckens eines Farbauszuges durch die entsprechende Druckkopfreihe 26 wird wiederum nach Erreichen des entsprechenden Schwell-Zählerstandes für die entsprechende Farbe bzw. Druckkopfreihe 26, wie bereits oben beschrieben, ausgelöst.

Gemäß einem zweiten Ausführungsbeispiel der Betriebsweise der Tintenstrahldruckvorrichtung 1 ist eine Bilddatenübertragung zwischen dem Bildrechner 11 und den Druckköpfen 6 mit getrennten bzw. aufgespalteten Farbkanälen vorgesehen. Dabei werden im Bildrechner 11 vier verschiedene Farbauszüge gehalten und können von der Steuereinrichtung 12, die das Bild-Datenverarbeitungssystem steuert, bei Bedarf angefordert werden. Dabei sind wiederum zwei verschiedene Varianten möglich, nämlich einerseits die Verwendung einer einzigen Übertragungsstrecke 201 zwischen dem Bildrechner 11 und der Druckkopfanordnung 5 oder andererseits die Verwendung von vier parallelen Übertragungsstrecken 201 für einen jeden der Farbauszüge.

Im Falle der Verwendung einer einzigen Übertragungsstrecke 201, werden die getrennten Farbauszüge von der Steuereinrichtung 12 angefordert, sobald sich die Fliese 151 unter der entsprechenden Druckkopfreihe 26 befindet. Dabei werden die Daten für die einzelnen Farbauszüge mehrerer Fliesen 151 im Bildrechner 11 zwischengepuffert und müssen eindeutig zugeordnet werden. Hierbei kommt es vor, dass der letzte Farbauszug der ersten Fliese 151 erst dann angefordert wird, wenn der erste Farbauszug, beispielsweise der sechsten Fliese 151 bereits gedrückt wird. Von Vorteil ist bei dieser Variante, dass dabei eine geringere Anzahl von Speicherbänken 204 für den pro Farbe vorhandenen Ringpuffer erforderlich ist und die Daten für die einzelnen Farben nur angefordert werden, wenn sie auch unmittelbar gedruckt werden.

Im Fall der Variante von vier parallelen Übertragungsstrecken 201 sind in dem Bildrechner 11 für jeden Farbauszug entsprechende Interfacekarten notwendig. Das System arbeitet in dieser Variante mit getrennten, physikalischen Kanälen für die einzelnen Farbauszüge.

Die Tintenstrahldruckvorrichtung 1 ist vorzugsweise zum Bedrucken von keramischen Fliesen 151 mit Bildnern bzw. Motiven vorgesehen. Da bei dem Bedrucken der Fliesen 151 freibleibende Ränder den optischen Eindruck stören würden, ist vorgesehen, dass bei der Erzeugung der Bilddaten zur Ansteuerung der Druckkopfanordnung 5 durch den Bildrechner der entsprechende Bildausschnitt derart gewählt wird, dass zumindest geringfügig über die Ränder der Fliesen 151 hinaus gedruckt wird. Bei der Berechnung der Bildinformationsdaten durch den Bildrechner 11 kann aber auch der Schwund der als Rohlinge vorliegenden Fliesen 151 bei der Bestimmung der Größe der zu druckenden Bildausschnitts berücksichtigt werden.

Der Bildrechner 11 erlaubt aber auch die Aufteilung eines die Fläche vieler Fliesen 151 überdeckenden Bildes und des Drucken der Teilausschnitte auf eine entsprechende Anzahl von Fliesen 151. Nach geeigneter Zusammensetzung der einzelnen Fliesen 151 mit jeweils einem Teilausschnitt können somit auf einfache Weise sehr große Gesamtbilder hergestellt werden. Dies ist insbesondere ohne die aufwendige Herstellung von Druckvorlagen möglich.

Ein weiteres Beispiel der vielfältigen Anwendungsmöglichkeiten ist das Erzeugen von möglichst unterschiedlich gemusterten Fliesen 151. Dies wird dadurch erreicht, dass aus einer Bildvorlage, die beispielsweise die Maserung einer Steinstruktur bzw. einer Bruchfläche eines Steines wiedergibt, durch den Bildrechner 11 ein zufällig gewählter Bildausschnitt bestimmt wird und als Grundlage zur Erzeugung des Druckbildes auf der Fliese 151 verwendet wird. Ein jeder dieser durch den Bildrechner 11 zufällig ausgewählten Bildausschnitte wird jedoch nur zum Bedrucken einer einzigen Fliese 151 verwendet, sodass jede der Fliesen 151 ein individuelles Erscheinungsbild aufweist und nach deren Zusammensetzung keine wiederkehrenden Muster in dem erhaltenen Gesamtbild erkennbar sind. Das wiedergegebene Muster der Steinstruktur erweckt dadurch in seiner Gesamtheit einen sehr natürlichen Eindruck.

Der Bildrechner 11 erlaubt aber auch die Berücksichtigung einer, von einer ebenen Oberseite 17 abweichenden Oberflächenstruktur, die beispielsweise Vertiefungen enthalten kann. Die Oberflächenstruktur der Oberfläche 17 kann durch den Bildrechner 11 insofern berücksichtigt werden, als von dieser vorgesehen wird, dass ein ausgewähltes Motiv, beispielsweise nur im Bereich von Vertiefungen der Fliese 151 gedruckt wird.

Für die Übertragung der Daten von dem Bildrechner 11 zu der Druckkopfanordnung 5 ist insbesondere vorgesehen, dass über die Übertragungsstrecke 201 zwischen 30 MB/s und 70 MB/s, vorzugsweise 50 MB/s, übertragen werden können. Besonders vorteilhaft erweist sich die Übertragung der Daten vom Bildrechner 11 über die Übertragungsstrecke 201 mit einer Übertragsrate von 50 oder mehr als 50 MB/s (Megabyte/Sekunde) durchzuführen. Beim Betrieb der Tintenstrahldruckvorrichtung 1 ist es somit möglich, dass der Vorschub der Druckteile 3 durch die Transporteinrichtung 3 mit einer Geschwindigkeit von bis zu 70 m/min (Meter/Minute) erfolgt. Insbesondere ist vorgesehen, dass die Bewegung der Druckteile mit einer variablen Geschwindigkeit von bis zu 70 m/min erfolgen kann.

Wie oben beschrieben worden ist, ist für das Bedrucken von rechteckigen Fliesen 151 die Einrichtung 20 zur Lagekorrektur der Druckteile 3 vorgesehen, durch die die Fliesen 151 in eine definierte Lage gebracht werden können. Die Tintenstrahldruckvorrichtung 1 erlaubt aber auch das Bedrucken von Druckteilen 3 beliebiger äußerer Kontur bzw. Form, als auch Ausrichtung. Dazu ist vorgesehen, dass im Eingangsbereich der Transporteinrichtung 2 die Kamera 21 ein Bild des auf dem Förderband 7 liegenden Druckteiles 3 aufzeichnet. Dieses Bild wird von der Kamera 21 an die Steuereinrichtung 12 übertragen und mit Hilfe einer Software zur automatischen Bilderkennung die Kontur des Druckteiles 3 ermittelt. Die Kontur des Druckteiles 3 wird schließlich an den Bildrechner 11 übermittelt. Dieser berücksichtigt die Form und Ausrichtung des Druckteiles, indem das zu druckende Motiv bzw. die entsprechenden Bilddaten transformiert, d.h. Lage und Ausrichtung angepasst, werden.

Zur Erhöhung der Leistungsfähigkeit der Tintenstrahldruckvorrichtung 1 kann auch vorgesehen werden, dass weitere Computer eines Netzwerkes zur Berechnung von Bilddaten für Druckaufträge mit dem Bildrechner 11 verbunden sind. Dabei ist es besonders von Vorteil, wenn die Steuereinrichtung 12, die selbst durch einen Computer gegliedert sein kann, und der Bildrechner 11 Bestandteil einer Client-Server-Architektur eines Computernetzwerkes sind, wobei in dem Computernetzwerk weitere Client-Rechner für die Berechnung von Bilddaten neben dem Bildrechner 11 zur Verfügung stehen. Dieser ermöglicht es, dass während eines laufenden Druckvorganges durch die zusätzlichen Client-Rechner bereits Druck-Jobs für eine spätere Verwendung vorbereitet bzw. berechnet werden können.

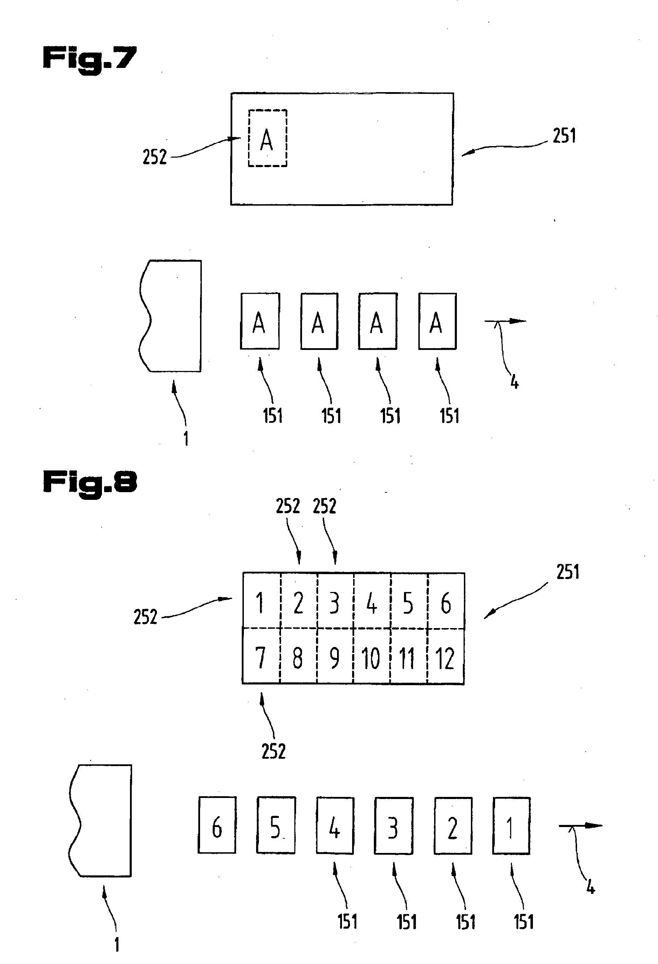

Anhand der nachfolgenden Fig. 7 bis 13 sollen nun verschiedene Betriebsweisen des Bedruckens von Fliesen 151 mit der Tintenstrahldruckvorrichtung 1 näher beschrieben werden.

Mit der erfindungsgemäßen Tintenstrahlvorrichtung 1, ist es möglich dass während laufendem Drucken on-the-fly aus einer größeren Bilddatei wahlweise nach einem geordneten Ablauf oder nach Random-/Zufallsprinzip (in beiden Fällen sind mehrere Betriebsarten möglich) automatisch unterschiedliche Ausschnitte so gedruckt werden, dass nach Möglichkeit jede bedruckte Vorlage (z.B. eine Fliese) ein anderes Muster hat und somit der Natur am besten nachempfunden wird. Dabei bedeutet "on-the fly", dass die Bilddatenverarbeitung einer zu druckenden Bilddatei derart erfolgen kann, dass während bereits der Aufdruck eines ersten Teiles des Bildes durch die Druckköpfe 6 der Druckkopfanordnung 5 erfolgt, die Berechnung der Bilddaten zur Ansteuerung der Druckkopfanordnung für einen weiteren Teil des Bildes bzw. der Bilddaten noch im Gange ist. Die Bilddatenverarbeitung erfolgt somit in diesem Sinne in Echtzeit.

In Fig. 7 ist in symbolisch vereinfachter Darstellungsweise die Herstellung einer Reihe von Fliesen 151 mit einem dekorativen Motiv wiedergegeben. Dazu wird aus einer Bildvorlage 251 mit Hilfe der Software der Bilddatenverarbeitung des Bildrechners 11 (Fig. 1) von dem Bediener ein Bildausschnitt 252 ausgewählt. Als Bildvorlage 251 wird beispielsweise das digitale Bild einer Bruchfläche eines Steins bzw. einer Steinstruktur verwendet. Die Größe dieser Bildvorlage 251 entspricht beispielsweise einer realen Größe von ca. 1 m x 2 m Seitenlänge und ermöglicht so die Auswahl eines geeigneten Bildausschnitts 252 von einer den Fliesen 151 entsprechender Größe. In der einfachsten Verfahrensweise wird der gleiche Bildausschnitt 252 auf eine voraus gewählte Anzahl von Fliesen 151 durch die Tintenstrahldruckvorrichtung 1 aufgebracht. Die Reihe der Fliesen 151 ist in Fig. 7 im fertig bedruckten Zustand, aus der Tintenstrahldruckvorrichtung 1, auslaufend dargestellt. Die Fliesen 151 sind jeweils mit dem gleichen Bildausschnitt 252 - symbolisiert durch den Buchstaben A - bedruckt.

Fig. 8 zeigt das Bedrucken einer Reihe von Fliesen 151 mit einer geordneten Auswahl von Bildausschnitten 252 aus der Bildvorlage 251. In dem Ausführungsbeispiels sind aus der Bildvorlage 251 zwölf nebeneinander liegende Bildausschnitte 252 - symbolisiert durch die Ziffern "1" bis "12" - ausgewählt. Jeweils zwölf Fliesen 151 können somit jeweils individuell mit einem unterschiedlichen Bildausschnitt 252 bedruckt werden, womit eine entsprechende Vielfalt unterschiedlich gestalteter Fliesen 151 erreicht wird.

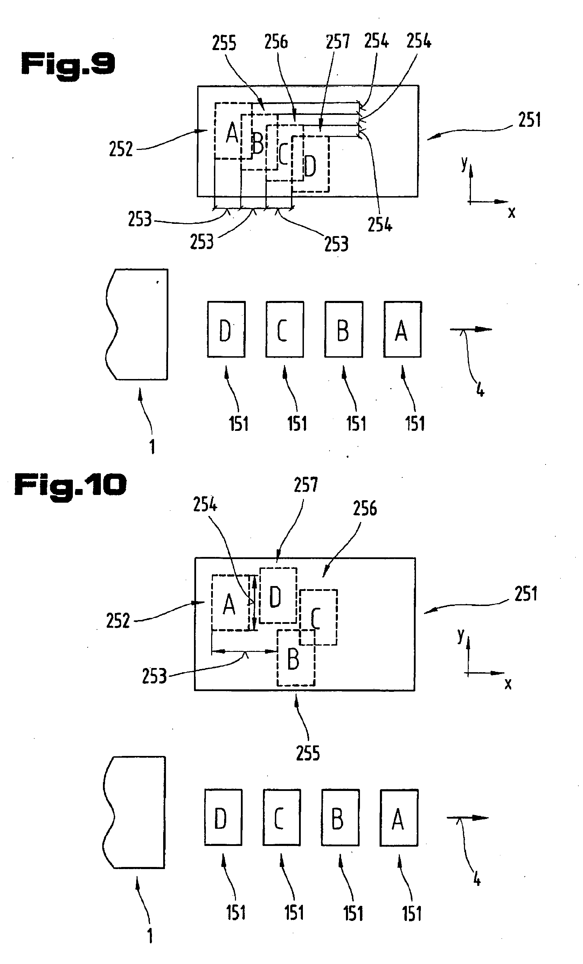

In der Fig. 9 ist ein weiteres Beispiel der Auswahl individuell unterschiedlicher Bildausschnitte 252 aus einer Bildvorlage 251 zum Bedrucken bzw. Dekorieren von Fließen 151 dargestellt. In diesem Fall wird zunächst ein erster Bildausschnitt 252 aus der Bildvorlage 251 gewählt. Zusätzlich wird ein Abstand 253 und ein Abstand 254 in X- bzw. Y-Richtung gewählt. Ein zweiter Bildausschnitt 255 wird sodann dadurch erhalten, dass die Begrenzungen des ersten Bildausschnittes 252 in X- bzw. Y-Richtung um den entsprechenden Abstand 253 in X-Richtung bzw. den Abstand 254 in Y-Richtung verschoben werden. Durch eine weitere Verschiebung der Begrenzungen des Bildausschnittes 255 um Abstände 253, 254 in X- bzw. Y-Richtung wird schließlich ein dritter Bildausschnitt 256 bzw. ein vierter Bildausschnitt 257 erhalten. Dieses Vorgehen bei der Auswahl von Bildausschnitten 252 kann zumindest solange fortgesetzt werden, bis die Begrenzungen der Bildvorlage 251 erreicht werden. Die Menge aller dieser Bildausschnitte 251, 255, 256 usw., werden durch den Bildrechner 11 bereitgehalten und stehen zum Bedrucken einer entsprechenden Anzahl von Fliesen 151 zur Verfügung.

In den Fig. 10, 11 und 12 sind Beispiele für die zufällige Auswahl von Bildausschnitten 252 aus einer Bildvorlage 251 gezeigt.

Bei dem Verfahren gemäß Fig. 10 wird zunächst ein erster Bildausschnitt 252 gewählt, worauf für die Abstände 253, 254 ein zuverlässiges Wertepaar bestimmt wird, in dessen Abhängigkeit sodann der zweite Bildausschnitt 255 bestimmt wird. Mit weiteren, zufälligen Wertepaaren für die Abstände 253, 254 zur Versetzung in X- bzw. Y-Richtung werden sodann die weiteren Bildausschnitte 256, 257 usw. bestimmt.

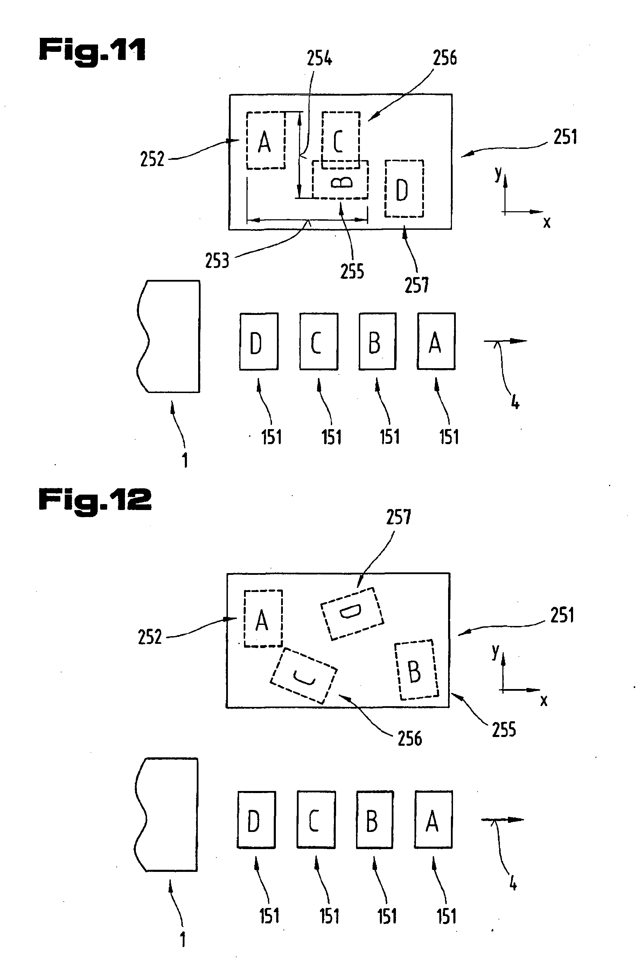

Im Auswahlverfahren für die Bildausschnitte 252 gemäß Fig. 11 ist zusätzlich vorgesehen, dass neben einer zufälligen Auswahl der Abstände 253 bzw. 254 auch eine zufällige Drehung der Begrenzungslinien des zweiten Bildausschnitts 255 bzw. der folgenden Bildausschnitte 256, 257, usw. um 90° erfolgt.

Gemäß dem Auswahlverfahren wie in Fig. 12 symbolisch dargestellt, ist zur Bestimmung der weiteren Bildausschnitte 255, 256, 257, usw., ausgehend von einem ersten Bildausschnitt 252, sowohl eine Versetzung um zufällig gewählte Abstände 253, 254 in X- bzw. Y-Richtung als auch eine auf zuverlässige Weise gewählte Verdrehung um einen beliebigen Winkel in der XY-Ebene vorgesehen.

Die gemäß den Fig. 8 bis 12 beschriebenen Auswahlverfahren von Bildausschnitten 252 erlauben so das Erzeugen von unterschiedlich gemusterten Fliesen 151, sodass jede von diesen ein möglichst individuelles Erscheinungsbild aufweist und so ein sehr natürlicher Eindruck erreicht werden kann.

Als zusätzliche Variationsmöglichkeit der Betriebsweise der Tintenstrahldruckvorrichtung kann auch vorgesehen werden, dass durch die Steuereinrichtung 12 bzw. den Bildrechner 11, den einzelnen Bildausschnitten 252, 255, 256 usw. aus der Folge der Bildausschnitte 252 (Fig. 8 bis 12) jeweils ein Wert einer prozentualen Häufigkeit (h_{A}, h_{B}, usw.) zugeordnet werden kann. Dadurch kann erreicht werden, dass bei einer großen Zahl hergestellter Fliesen 151 solche mit einem Aufdruck entsprechend dem Bildausschnitt 252 "A" mit einer Häufigkeit h_{A} und solche mit einem Bildausschnitt 255 "B" mit einer prozentualen Häufigkeit h_{B} in der Menge der Bedruckten Fliesen 151 enthalten sind (Fig. 12).

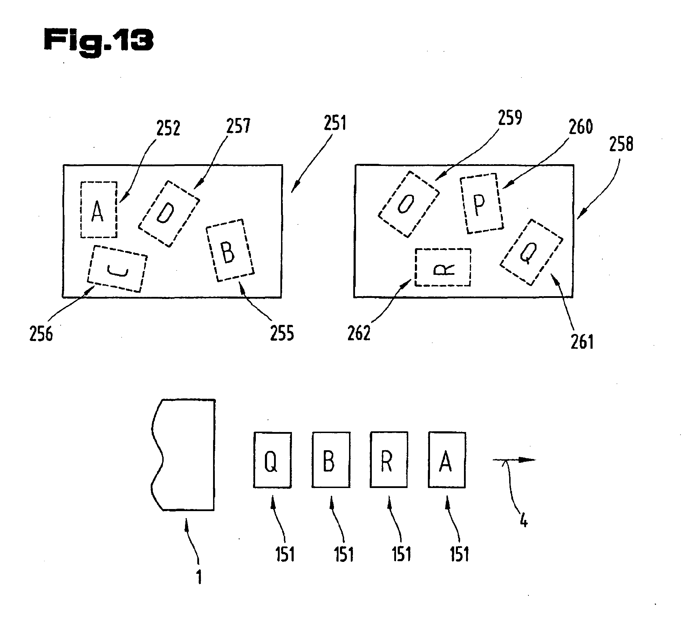

Anhand der Fig. 13 wird eine weitere Variationsmöglichkeit zur Betriebsweise der Tintenstrahldruckvorrichtung 1 zur Herstellung möglichst unterschiedlich mit dekorativen Motiven versehener Fliesen 151 beschrieben. Neben einer Folge von Bildausschnitten 252, 254, 255, usw. einer ersten Bildvorlage 251 (A, B, C, D, usw.) wird durch den Bildrechner 11 bzw. einen weiteren Clientrechner eines mit dem Bildrechner 11 bzw. der Steuereinrichtung 12 in Verbindung stehenden Computemetzwerkes aus einer zweiten Bildvorlage 258 eine weitere Folge von Bildausschnitten 259, 260, 261, 262, usw. (O, P, Q, R, usw.) berechnet. Es wird somit ein erster Druckauftrag bzw. Printjob mit den Bildausschnitten 252, 255, 256, usw. (A, B, C, D) der ersten Bildvorlage 251 und ein zweiter Druckauftrag bzw. Printjob mit den Bildausschnitten 259, 260, 261 usw. (O, P, Q, R, usw.) durch den Bildrechner 11 erzeugt und zum Bedrucken von Fliesen 151 bereitgehalten. Als weitere Variationsmöglichkeit kann vorgesehen sein, dass eine zufällige Durchmischung von Bildausschnitten 252, 255, usw. des ersten Druckauftrages mit den Bildausschnitten 259, 260, usw. des zweiten Druckauftrages erfolgt. Während des laufenden Druckvorganges mit der Tintenstrahldruckvorrichtung 1 werden von der Steuereinrichtung 12 in zufälliger Weise die Daten von Bildausschnitten aus den unterschiedlichen Bildvorlagen 251, 258 gewählt und zum Bedrucken der Fliesen 151 verwendet.

Mit der Tintenstrahldruckvorrichtung 1 ist aber auch das passgenaue Bedrucken von Fliesen 151 mit einer reliefartigen Oberflächenstruktur mit einem dieser Oberflächenstruktur entsprechenden Bildausschnitt möglich. Dazu wird mit der in dem Eingangsbereich der Transporteinrichtung 2 der Tintenstrahldruckvorrichtung 1 (Fig. 1) angeordneten Kamera 21 der Druckteil 3 bzw. die Fliese 151 identifiziert. Alternativ kann die Erkennung der Fliese 151 beispielsweise auch durch eine an der Unterseite der Fliese 151 angebrachte Markierung mit einem Code und die Erfassung dieses Codes mit einem geeigneten Sensor (nicht dargestellt) erfolgen. Von der Steuereinrichtung 12 wird sodann veranlasst, dass von dem Bildrechner 11 das der Fliese 151 bzw. deren Oberflächenstruktur entsprechende Bild zum Drucken zur Verfügung gestellt wird. Durch Detektion der Art der Fliese 151 als auch deren Ausrichtung mit der Kamera 21 kann in der Folge sichergestellt werden, dass Teile des entsprechenden Bildes, die einer Erhebung entsprechen, auch an der entsprechenden erhabenen Stelle der Fliese 151 und Teile des Bildes, die einer Vertiefung entsprechen, an einer entsprechend vertieften Stelle der Fliese 151 gedruckt werden. Durch das Vorsehen eines Codes an den Druckteilen 3 bzw. den Fliesen 151 bzw. durch das Erfassen und Identifizieren mit der Kamera 21 ist es möglich, dass unterschiedliche Fliesen 151, die mit unterschiedlichen Oberflächenstrukturen versehen sind, in einem gemeinsamen Druckauftrag bearbeitet werden können. Je nachdem welche Art von Fliesen 151 durch die Kamera 20 erfasst bzw. erkannt wird, wird durch die Steuereinrichtung 12 bzw. dem Bildrechner 11 das entsprechende Bild zum Bedrucken bereit gehalten und werden die Druckköpfe der Druckkopfanordnung 5 mit den entsprechenden Steuersignalen angesteuert.

### Bezugszeichenaufstellung

- 1: Tintenstrahldruckvorrichtung
- 2: Transporteinrichtung
- 3: Druckteil
- 4: Vorschubrichtung
- 5: Druckkopfanordnung

- 6: Druckkopf
- 7: Förderband
- 8: Umlenkrolle
- 9: Führungsplatte
- 10: Führung

- 11: Bildrechner
- 12: Steuereinrichtung
- 13: Tank
- 14: Düsenspüleinrichtung
- 15: Reinigungseinrichtung

- 16: Sensor
- 17: Oberseite
- 18: Sensor
- 19: Vorderkante
- 20: Einrichtung

- 21: Kamera
- 22: Düsenreihe
- 23: Düsenreihenlänge
- 24: Druckbereichbreite
- 25: Druckkopfmodul

- 26: Druckkopfreihe
- 27: Druckbereichsbreite
- 28: Druckbereichslänge

- 101: Trichterreihe
- 102: Auffangtrichter
- 103: Trichterreihe
- 104: Auffangrichter
- 105: Düsenreinigungseinrichtung

- 106: Absaugbalken
- 107: Absaugdüse
- 108: Leitung
- 109: Pumpe
- 110: Tintenreinigungseinrichtung

- 111: Tank
- 112: Mitnehmerrolle
- 113: Zwischenspeicher

- 151: Fliese
- 152: Führungsleiste
- 153: Führungsleiste
- 154: Abstand
- 155: Breite
- 156: Stellschlitten
- 157: Stellschlitten

- 201: Übertragungsstrecke
- 202: Datenübertragungsschaltung
- 203: Pufferschaltung
- 204: Speicherbank
- 205: Zählwerk
- 206: Druckkopf-Interface

- 251: Bildvorlage
- 252: Bildausschnitt
- 253: Abstand
- 254: Abstand
- 255: Bildausschnitt

- 256: Bildausschnitt
- 257: Bildausschnitt
- 258: Bildvorlage
- 259: Bildausschnitt
- 260: Bildausschnitt

- 261: Bildausschnitt
- 262: Bildausschnitt

## Patentansprüche

1. Verfahren zum Drucken mehrfarbiger Bilder mit einer Tintenstrahldruckvorrichtung (1) mit einer im Wesentlichen horizontal angeordneten Transporteinrichtung (2) zum Bewegen von darauf liegenden, zu bedruckenden Druckteilen (3) in einer Vorschubrichtung (4) und mit einer oberhalb der Transporteinrichtung (2) angeordneten Druckkopfanordnung (5), die während des Druckvorganges relativ zur Transporteinrichtung (2) stationär angeordnet ist, wobei die Druckkopfanordnung (5) für eine jede der zu druckenden Farben eine sich senkrecht bezüglich der Vorschubrichtung (4) erstreckende Druckkopfreihe (26) aufweist, die aus mehreren Druckköpfen (6) mit jeweils mehreren in einer Düsenreihe (22) angeordneten Düsen gebildet ist, und wobei die Düsenreihen (22) eine senkrecht bezüglich der Vorschubrichtung (4) gemessene Druckbereichbreite (24) aufweisen, durch die eine gesamte Druckbereichsbreite (27) der Druckkopfanordnung (5) entsprechend der Anzahl der Druckköpfe (6) der Druckkopfreihe (26) gebildet ist, wobei die Düsenreihen (22) bezüglich der Vorschubrichtung (4) schräg angeordnet sind, sodass sich die Düsen der Druckkopfreihe (26) über eine bezüglich der Vorschubrichtung (4) parallele Druckbereichslänge erstrecken, wobei der Druckkopfanordnung (5) eine Bilddatenschaltung zugeordnet ist, die für eine jede der zu druckenden Farben jeweils eine Pufferschaltung (203) zum Zwischenspeichern von Farbauszügen von Bilddaten eines Bildes aufweist, und wobei jede der jeweils einer Farbe zugeordneten Pufferschaltungen (203) eine erste Speicherbank (204) zum Zwischenspeichern des entsprechenden Farbauszugs der Bilddaten eines ersten Bildes und zumindest eine zweite Speicherbank (204) zum Zwischenspeichern des entsprechenden Farbauszugs der Bilddaten eines zweiten Bildes aufweist, wobei die Bilddaten des ersten Bildes zur Größe eines ersten Druckteiles (3) und die Bilddaten des zweiten Bildes zur Größe eines zweiten Druckteiles (3) passend berechnet werden, wobei
a) von mehreren Bildern jeweils getrennte Farbauszüge der Bilddaten berechnet werden und
b) diese in jeweils eigenen Speicherbänken (204) von jeweils einer Farbe entsprechenden Pufferschaltungen (203) gespeichert werden und
c) beim Passieren einer Vorderkante (19) eines ersten Druckteils (3) an einem Sensor (18) ein Zähler eines Zählwerks (205) gestartet wird und
d) beim Passieren einer Vorderkante (19) eines weiteren Druckteils (3) an dem Sensor (18) ein weiterer Zähler des Zählwerks (205) gestartet wird und
e) bei Erreichen eines Zählerstands, der dem Streckenäquivalent vom Montageort des Sensors (18) bis zu einer ersten Druckkopfreihe (26) der ersten Farbe entspricht, die Ausgabe eines ersten Farbauszuges eines ersten Bildes aus der Pufferschaltung (203) an die Druckköpfe (6) der ersten Druckkopfreihe (26) zum Bedrucken des ersten Druckteils (3) gestartet wird und, wenn der weitere Druckteil (3) unter die erste Druckkopfreihe (26) tritt und noch bevor der erste Druckteil (3) die erste Druckkopfreihe (26) verlassen hat, Bilddaten von zwei Bildern gleichzeitig von zwei verschiedenen Speicherbänken (204) der Pufferschaltung (203) ausgelesen und durch die Druckköpfe (6) der ersten Druckkopfreihe (26) gedruckt werden und
f) Schritt e) für alle weiteren Farben und diesen entsprechenden weiteren Druckkopfreihen (26) wiederholt wird.

2. Verfahren nach Anspruch 1, **dadurch gekennzeichnet, dass** die Farbauszüge der Bilddaten in einem Bildrechner (11) berechnet werden und diese über eine Übertragungsstrecke (201) in Form von byteweise nacheinander in wiederkehrender Reihenfolge angeordneten Paketen an die Pufferschaltungen (203) übertragen werden.

3. Verfahren nach Anspruch 2, **dadurch gekennzeichnet, dass** bei der Berechnung der Farbauszüge der Bilddaten im Bildrechner (11) ein zu druckender Bildausschnitt (252) gewählt wird, der einen äußeren Rand des zu bedruckenden Druckteils (3) geringfügig überragt.

4. Verfahren nach Anspruch 1 oder 2, **dadurch gekennzeichnet, dass** bei der Berechnung der Farbauszüge der Bilddaten im Bildrechner (11) eine Steuereinrichtung (12) bzw. der Bildrechner (11) einen durch Zufall bestimmten Bildausschnitt (252) aus einer Bildvorlage (251, 258) auswählt.

5. Verfahren nach einem der Ansprüche 1 bis 4, **dadurch gekennzeichnet, dass** bei der Berechnung der Farbauszüge der Bilddaten ein externer Computer verwendet wird.

6. Verfahren nach Anspruch 4 oder 5, **dadurch gekennzeichnet, dass** zum Erzeugen von unterschiedlich gemusterten Fliesen (151) bzw. Druckteilen (3) eine erste Folge von durch Zufall bestimmten Bildausschnitten (252, 254, 255, usw.) einer ersten Bildvorlage (251) und eine zweite Folge von durch Zufall bestimmten Bildausschnitten (259, 260, 261, 262, usw.) einer zweiten Bildvorlage (258) ausgewählt werden und eine Durchmischung der ersten Folge von Bildausschnitten (252, 254, 255, usw.) mit der zweiten Folge von Bildausschnitten (259, 260, 261, 262, usw.) erfolgt.

7. Verfahren nach einem der Ansprüche 1 bis 6, **dadurch gekennzeichnet, dass** im eingangsseitigen Bereich einer Transporteinrichtung (2) der Tintenstrahldruckvorrichtung (1) eine Kamera (21) zur Aufzeichnung von Bildern der Druckteile (3) angeordnet wird und eine Steuereinrichtung (12) bzw. ein Bildrechner (11) mit einer Software zur automatischen Bilderkennung ausgebildet wird und die Steuereinrichtung (12) bzw. der Bildrechner (11) die Form und Ausrichtung des Druckteiles (3) berücksichtigt, indem das zu druckende Motiv bzw. die entsprechenden Bilddaten entsprechend der Lage und Ausrichtung transformiert werden.

8. Verfahren nach einem der Ansprüche 2 bis 7, **dadurch gekennzeichnet, dass** die Übertragungsstrecke (201) zur Übertragung von Daten im Bereich von mindestens 50 MB/s (Megabyte/Sekunde) ausgebildet wird.

9. Verfahren nach einem der Ansprüche 2 bis 8, **dadurch gekennzeichnet, dass** die Übertragungsstrecke (201) durch eine faser-optische Datenübertragungsleitung gebildet wird.

10. Verfahren nach einem der vorhergehenden Ansprüche, **dadurch gekennzeichnet, dass** die Druckkopfreihen (26) durch nebeneinander angeordnete Druckköpfe (6) gebildet werden,
wobei die Druckkopfreihen (26) bezüglich der Vorschubrichtung (4) hintereinander angeordnet werden.

11. Verfahren nach einem der vorhergehenden Ansprüche, **dadurch gekennzeichnet, dass** die Bilddatenschaltung mit dem Zählwerk (205) mit mehreren Zählern ausgebildet wird und an einem eingangsseitigen Bereich der Transporteinrichtung (2) der Sensor (18) zur Detektion einer Vorderkante (19) des Druckteiles (3) vorgesehen wird und der Sensor (18) mit dem Zählwerk (205) signalverbunden wird.

12. Verfahren nach einem der vorhergehenden Ansprüche, **dadurch gekennzeichnet, dass** im eingangsseitigen Bereich der Transporteinrichtung (2) ein Sensor (16) zur Detektion einer vertikalen Lage einer Oberseite (17) des Druckteiles (3) angeordnet wird.

13. Verfahren nach einem der vorhergehenden Ansprüche, **dadurch gekennzeichnet, dass** im eingangsseitigen Bereich der Transporteinrichtung (2) eine Einrichtung (20) zur Lagekorrektur der Druckteile (3) angeordnet wird, die eine linke und eine rechte Führungsleiste (152, 153) aufweist, wobei die Führungsleisten (152, 153) bezüglich der Vorschubrichtung (4) schräg angeordnet werden und wobei ein Abstand (154) zwischen den Führungsleisten (152, 153) sich bezüglich der Vorschubrichtung (4) allmählich verringert.

14. Verfahren nach einem der vorhergehenden Ansprüche, **dadurch gekennzeichnet, dass** ein externer Computer mit der Steuereinrichtung (12) bzw. dem Bildrechner (11) zur Bearbeitung von Bilddaten mit für Druckaufträge verbunden wird.

## Claims

1. Method of printing multicoloured images with an ink jet printing device (1) with an essentially horizontally disposed conveyor mechanism (2) for moving items to be printed (3) lying on it in a forward feed direction (4), and with a print head arrangement (5) disposed above the conveyor mechanism (2) which is disposed stationary relative to the conveyor mechanism (2) during the printing process, and the print head arrangement (5) has a print head row (26) extending perpendicular to the forward feed direction (4) for each of the colours to be printed, made up of several print heads (6) each comprising several nozzles disposed in a nozzle row (22), and the nozzle rows (22) have a printing range width (24) as measured perpendicular to the forward feed direction (4) by means of which a total printing range width (27) of the print head arrangement (5) is formed corresponding to the number of print heads (6) of the print head row (26), and the nozzle rows (22) are disposed obliquely with respect to the forward feed direction (4) so that the nozzles of the print head row (26) extend across a printing range length parallel with respect to the forward feed direction (4), wherein the print head arrangement (5) co-operates with an image data circuit, which image data circuit has a respective buffer circuit (203) for each of the colours to be printed which temporarily stores the corresponding colour separations of the image data of an image, and each of the buffer circuits (203) associated to one of the colours respectively has a first memory bank (204) for temporarily storing the corresponding colour separation of the image data of a first image and at least a second memory bank (204) for temporarily storing the corresponding colour separation of the image data of a second image, and the image data of the first image are computed to fit the size of a first item to be printed (3), and the image date of the second image are computed to fit the size of a second item to be printed (3), whereby
a) separate respective colour separations of the image data are computed from several images and
b) the latter are stored in separate memory banks (204) of buffer circuits (203) each corresponding to a respective colour and
c) a counter of a counting unit (205) is started as a leading edge (19) of a first item to be printed (3) passes by a sensor (18) and
d) as a leading edge (19) of another item to be printed (3) passes by the sensor (18), another counter of the counting unit (205) is started and
e) when a counter status corresponds to the distance equivalent to that from the point at which the sensor (18) is mounted to a first print head row (26) of the first colour, the output of a first colour separation of a first image from the buffer circuit (203) to the print heads (6) of the first print head row (26) for printing the first image to be printed (3) is started, and as the second item to be printed (3) starts to move underneath the first print head row (26) even before the first item to be printed (3) has moved away from the first print head row (26), image data relating to two images is simultaneously read from two different memory banks (204) of the buffer circuit (203) and printing takes place by the print heads (6) of the first print head row (26), and
f) step e) is repeated for all the other colours and further corresponding print head rows (26).

2. Method as claimed in claim 2, **characterized in that** the colour separations of the image data are computed in an image computer (11) and transmitted via a transmission route (201) to the buffer circuits (203) in the form of packets based on bytes one after the other in a recurring sequence.

3. Method as claimed in claim 2, **characterized in that** as the colour separations of the image data are computed in the image computer (11), an image detail (252) to be printed is selected which extends slightly beyond an outer edge of the item to be printed (3).

4. Method as claimed in claim 1 or 2, **characterized in that** as the colour separations of the image data are computed in the image computer (11), a control unit (12) or the image computer (11) selects a specific image detail (252) at random from an image master (251, 258).

5. Method as claimed in one of claims 1 to 4, **characterized in that** an external computer is used to compute the colour separations of the image data.

6. Method as claimed in claim 4 or 5, **characterized in that** in order to create differently patterned tiles (151) or items to be printed (3), a first series of randomly determined image details (252, 254, 255, etc.) is selected from a first image master (251) and a second series of randomly determined image details (259, 260, 261, 262, etc.) is selected from a second image master (258) and the first series of image details (252, 254, 255, etc.) is mixed with the second series of image details (259, 260, 261, 262, etc.).

7. Method as claimed in claim 1 to 6, **characterized in that** a camera (21) is provided at the inlet-end region of the conveyor mechanism (2) for recording images of the items to be printed (3) and a control unit (12) or an image computer (11) is provided with an automatic image detection software, and the control unit or the image computer (11) takes account of the shape and orientation of the item to be printed (3) by transforming the pattern or the corresponding image data according to the shape and orientation of the item to be printed (3).

8. Method as claimed in one of claims 2 to 7, **characterized in that** the transmission route (201) is configured to transmit data in the range of at least 50 MB/s (megabyte/second).

9. Method as claimed in one of claims 2 to 8, **characterized in that** the transmission route (201) is provided in the form of a fibre-optic data transmission cable.

10. Method as claimed in one of the preceding claims, **characterized in that** the print head rows (26) are formed by adjacently disposed print heads (6), and the print heads rows (26) are disposed one after another in the forward feed direction (4).

11. Method as claimed in one of the preceding claims, **characterized in that** the image data circuit has the counting unit (205) with several counters, and the sensor (18) is provided at an inlet-end region of the conveyor mechanism (2) for detecting a leading edge (19) of the item to be printed (3), and the sensor (18) is connected to the counting unit (205) by a signal transmission.

12. Method as claimed in one of the preceding claims, **characterized in that** a sensor (16) is provided at the inlet-end region of the conveyor mechanism (2) for detecting a vertical position of a top face (17) of the item to be printed (3).

13. Method as claimed in one of the preceding claims, **characterized in that** a mechanism (20) is provided at the inlet-end region of the conveyor mechanism (2) for correcting the position of the items to be printed (3), which mechanism has a left-hand and a right-hand guide bar (152, 153), which guide bars (152, 153) are disposed obliquely with respect to the forward feed direction (4), and a distance (154) between the guide bars (152, 153) reduces gradually in the forward feed direction (4).

14. Method as claimed in one of the preceding claims, **characterized in that** an external computer is connected to the control unit (12) or the image computer (11) for processing image date for print runs.

## Revendications

1. Procédé d'impression d'images multicolores avec un appareil d'impression à jet d'encre (1), comprenant un dispositif de transport (2) agencé sensiblement horizontalement pour déplacer des pièces d'impression (3) devant être imprimées situées sur celui-ci dans une direction d'avance (4) et comprenant un agencement de têtes d'impression (5) agencé au-dessus du dispositif de transport (2) qui est agencé de façon stationnaire par rapport au dispositif de transport (2) pendant le processus d'impression, étant entendu que l'agencement de têtes d'impression (5) présente, pour chacune des couleurs à imprimer, une rangée de têtes d'impression (26) s'étendant perpendiculairement par rapport à la direction d'avance (4) qui est formée de plusieurs têtes d'impression (6) avec à chaque fois plusieurs buses agencées dans une rangée de buses (22), et étant entendu que les rangées de buses (22) présentent une largeur de zone d'impression (24) mesurée perpendiculairement par rapport à la direction d'avance (4) au travers de laquelle une largeur de zone d'impression complète (27) de l'agencement de têtes d'impression (5) est formée en fonction du nombre de têtes d'impression (6) de la rangée de têtes d'impression (26), étant entendu que les rangées de buses (22) sont agencées obliquement par rapport à la direction d'avance (4) de telle sorte que les buses de la rangée de têtes d'impression (26) s'étendent sur une longueur de zone d'impression parallèle par rapport à la direction d'avance (4), étant entendu qu'à l'agencement de têtes d'impression (5) est adjoint un circuit de données d'images qui présente pour chacune des couleurs à imprimer, respectivement, un circuit tampon (203) pour la mise en mémoire intermédiaire d'extraits de couleurs de données d'image d'une image, et étant entendu que chacun des circuits tampons (203) affectés respectivement à une couleur présente un premier banc de mémoire (204) pour la mise en mémoire intermédiaire de l'extrait de couleur correspondant des données d'image d'une première image et au moins un deuxième banc de mémoire (204) pour la mise en mémoire intermédiaire de l'extrait de couleur correspondant des données d'image d'une deuxième image, étant entendu que les données d'image de la première image sont calculées de façon adaptée aux dimensions d'une première pièce d'impression (3) et les données d'image de la deuxième image de façon adaptée aux dimensions d'une deuxième pièce d'impression (3), étant entendu que :
a) sur plusieurs images, des extraits de couleur séparés des données d'image sont à chaque fois calculés, et
b) ceux-ci sont enregistrés dans des propres bancs de mémoire (204) respectifs par des circuits tampons (203) correspondant respectivement à une couleur, et
c) lors du passage d'une arête avant (19) d'une première pièce d'impression (3) devant un capteur (18), un compteur d'un appareil compteur (205) est démarré, et
d) lors du passage d'une arête avant (19) d'une autre pièce d'impression (3) devant le capteur (18), un autre compteur de l'appareil compteur (205) est démarré, et
e) lors de l'arrivée à une position du compteur qui correspond à l'équivalent du segment de la position de montage du capteur (18) à une première rangée de têtes d'impression (26) de la première couleur, l'émission d'un premier extrait de couleur d'une première image est démarrée à partir du circuit tampon (203) au niveau des têtes d'impression (6) de la première rangée de têtes d'impression (26) aux fins de l'impression de la première pièce d'impression (3), et lorsque l'autre pièce d'impression (3) arrive en dessous de la première rangée de têtes d'impression (26) et avant que la première pièce d'impression (3) a quitté la première rangée de têtes d'impression (26), les données d'image de deux images sont lues en même temps par deux bancs de mémoire (204) différents du circuit tampon (203) et imprimées par les têtes d'impression (6) de la première rangée de têtes d'impression (26), et
f) l'étape e) est répétée pour toutes les autres couleurs et les autres rangées de têtes d'impression (26) correspondant à celles-ci.

2. Procédé selon la revendication 1, **caractérisé en ce que** les extraits de couleur des données d'image sont calculés dans un calculateur d'images (11) et ils sont transmis aux circuits tampons (203) par le biais d'un segment de transmission (201) sous la forme de paquets agencés l'un après l'autre dans une succession répétée à la manière d'octets.

3. Procédé selon la revendication 2, **caractérisé en ce que** lors du calcul des extraits de couleur des données d'image dans le calculateur d'images (11), une section d'image à imprimer (252) est sélectionnée qui dépasse légèrement un bord extérieur de la pièce d'impression à imprimer (3).

4. Procédé selon la revendication 1 ou 2, **caractérisé en ce que** lors du calcul des extraits de couleur des données d'image dans le calculateur d'images (11), un dispositif de commande (12) ou le calculateur d'images (11) sélectionne une section d'image (252) déterminée de façon aléatoire à partir d'un modèle d'image (251, 258).

5. Procédé selon l'une des revendications 1 à 4, **caractérisé en ce que** lors du calcul des extraits de couleur des données d'image, un ordinateur externe est utilisé.

6. Procédé selon la revendication 4 ou 5, **caractérisé en ce que** pour produire des carreaux (151) ou des pièces d'impression (3) ayant des motifs différents, une première succession de sections d'images (252, 254, 255, etc.) déterminées de façon aléatoire d'un première modèle d'image (251) et une deuxième succession de sections d'images (259, 260, 261, 262, etc.) déterminées de façon aléatoire d'un deuxième modèle d'image (258) sont sélectionnées et un mélange de la première succession de sections d'images (252, 254, 255, etc.) avec la deuxième succession de sections d'images (259, 260, 261, 262, etc.) est réalisé.

7. Procédé selon l'une des revendications 1 à 6, **caractérisé en ce que** dans la zone du côté de l'entrée d'un dispositif de transport (2) de l'appareil d'impression à jet d'encre (1), une caméra (21) est agencée pour enregistrer des images des pièces d'impression (3) et un dispositif de commande (12) ou un calculateur d'images (11) comprenant un logiciel est conçu pour la reconnaissance automatique d'images et le dispositif de commande (12) ou le calculateur d'images (11) tient compte de la forme et de l'orientation de la pièce d'impression (3) **en ce que** le motif à imprimer ou les données d'image correspondantes sont transformés en fonction de la position et de l'orientation.

8. Procédé selon l'une des revendications 2 à 7, **caractérisé en ce que** le segment de transmission (201) est conçu pour la transmission de données à un intervalle d'au moins 50 Mo/s (méga-octets par seconde).

9. Procédé selon l'une des revendications 2 à 8, **caractérisé en ce que** le segment de transmission (201) est formé par une conduite de transmission de données en fibre optique.

10. Procédé selon l'une des revendications précédentes, **caractérisé en ce que** les rangées de têtes d'impression (26) sont formées par des têtes d'impression (6) agencées l'une à côté de l'autre, étant entendu que les rangées de têtes d'impression (26) sont agencées l'une derrière l'autre par rapport à la direction d'avance (4).

11. Procédé selon l'une des revendications précédentes, **caractérisé en ce que** le circuit de données d'image comprenant l'appareil compteur (205) est réalisé avec plusieurs compteurs, et dans une zone du côté de l'entrée du dispositif de transport (2), le capteur (18) destiné à la détection d'une arête avant (19) de la pièce d'impression (3) est prévu et le capteur (18) est relié par signaux avec l'appareil compteur (205).

12. Procédé selon l'une des revendications précédentes, **caractérisé en ce que** dans la zone du côté de l'entrée du dispositif de transport (2), un capteur (16) destiné à la détection d'une position verticale d'un côté supérieur (17) de la pièce d'impression (3) est agencé.

13. Procédé selon l'une des revendications précédentes, **caractérisé en ce que** dans la zone du côté de l'entrée du dispositif de transport (2), un dispositif (20) destiné à la correction de la position des pièces d'impression (3) est agencé, lequel présente une baguette de guidage gauche et droite (152, 153), étant entendu que les baguettes de guidage (152, 153) sont agencées en oblique par rapport à la direction d'avance (4) et étant entendu qu'une distance (154) entre les baguettes de guidage (152, 153) se rétrécit progressivement par rapport à la direction d'avance (4).

14. Procédé selon l'une des revendications précédentes, **caractérisé en ce qu'**un ordinateur externe est relié au dispositif de commande (12) ou au calculateur d'images (11) aux fins du traitement de données d'image pour des travaux d'impression.
